(19) Europäisches Patentamt
European Patent Office
Office européen des brevets

(11) EP 4 583 464 A1

(12) **EUROPEAN PATENT APPLICATION**
published in accordance with Art. 153(4) EPC

(43) Date of publication:
09.07.2025 Bulletin 2025/28

(21) Application number: 23870583.4

(22) Date of filing: 21.09.2023

(51) International Patent Classification (IPC):
*H04L 25/03* (2006.01)

(52) Cooperative Patent Classification (CPC):
H04L 25/03

(86) International application number:
PCT/CN2023/120430

(87) International publication number:
WO 2024/067351 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.09.2022 CN 202211184806

(71) Applicant: Huawei Technologies Co., Ltd.
Shenzhen, Guangdong 518129 (CN)

(72) Inventors:
• HA, Yinaer
Shenzhen, Guangdong 518129 (CN)
• ZENG, Yu
Shenzhen, Guangdong 518129 (CN)
• GENG, Tingting
Shenzhen, Guangdong 518129 (CN)

(74) Representative: Gill Jennings & Every LLP
The Broadgate Tower
20 Primrose Street
London EC2A 2ES (GB)

(54) **DATA TRANSMISSION METHOD AND RELATED APPARATUS**

(57) Embodiments of this application relate to the field of artificial intelligence. Embodiments of this application provide a data transmission method and a related apparatus. The method includes: A first communication device obtains scrambling policy indication information, where the scrambling policy indication information indicates a scrambling policy used by the first communication device. The first communication device scrambles data for an artificial intelligence AI model based on the scrambling policy indication information, to obtain scrambled data. The first communication device sends the scrambled data to a second communication device. In the technical solution, when privacy data is transmitted between communication devices, the data of the AI model may be scrambled. In this way, transmission security of the data of the AI model can be ensured.

FIG. 2

**Description**

This application claims priority to Chinese Patent Application No. 202211184806.1, filed with the China National Intellectual Property Administration on September 27, 2022 and entitled "DATA TRANSMISSION METHOD AND RELATED APPARATUS", which is incorporated herein by reference in its entirety.

**TECHNICAL FIELD**

Embodiments of this application relate to the field of artificial intelligence, and in particular, to application of an artificial intelligence technology in the field of communication technologies, and more specifically, to a data transmission method and a related apparatus.

**BACKGROUND**

Artificial intelligence (Artificial Intelligence, AI) refers to a theory, a method, a technology, and an application system that are used to simulate, extend, and expand human intelligence by using a digital computer or a machine controlled by the digital computer, to perceive an environment, acquire knowledge, and obtain an optimal result by using the knowledge. In other words, the artificial intelligence is a branch of computer science and attempts to understand essence of intelligence and produce a new intelligent machine that can react in a manner similar to the human intelligence. The artificial intelligence is to research design principles and implementation methods of various intelligent machines, so that the machines have perception, inference, and decision-making functions. Research in the field of the artificial intelligence includes robotics, natural language processing, computer vision, decision-making and inference, human-machine interaction, recommendation and search, AI basic theories, and the like.

**SUMMARY**

Embodiments of this application provide a data transmission method and a related apparatus, to scramble data in an AI model, to ensure transmission security of the data in the AI model.

According to a first aspect, an embodiment of this application provides a data transmission method. The method includes: A first communication device obtains scrambling policy indication information, where the scrambling policy indication information indicates a scrambling policy used by the first communication device. The first communication device scrambles target data based on the scrambling policy indication information, to obtain scrambled data, where the target data is data used for an AI model. The first communication device sends the scrambled data to a second communication device.

In the foregoing technical solution, when privacy data is transmitted between communication devices, the data of the AI model may be scrambled. In this way, transmission security of the data of the AI model can be ensured.

In some embodiments, the first communication device and the second communication device may be communication devices in a mobile communication network. For example, the first communication device may be a terminal device, and the second communication device may be a network device. For another example, the first communication device may be a network device, and the second communication device may be a terminal device.

When the first communication device is the network device and the second communication device is the terminal device, the target data includes at least one of the following data: a parameter of the AI model or output data of the AI model.

A training process of the AI model may involve a large amount of data. The data may be obtained and processed by an organization, an institution, or a company at a high cost, and then a large amount of time and money are used to train the AI model to obtain related parameters. Therefore, once parameters of these AI models are leaked, huge losses may be caused to these organizations, institutions, or companies. Based on the foregoing technical solution, the parameter of the AI model and the output data of the AI model are scrambled, so that security of the data of the AI model in a transmission process can be protected.

When the first communication device is the terminal device and the second communication device is the network device, the target data is input data of the AI model, or the target data is training data used to train the AI model.

The input data or training data of the AI model usually includes user privacy data. In the foregoing technical solution, the data is scrambled, to protect privacy data of a user in a data transmission process.

With reference to the first aspect, in a possible implementation of the first aspect, the scrambling policy indication information specifically indicates a computing capability of the second communication device.

Based on the foregoing technical solution, the first communication device may determine the scrambling policy based on the computing capability of the second communication device. In this way, the determined scrambling policy can be applicable to the second communication device, and the second communication device can use the scrambled data determined by the first communication device.

With reference to the first aspect, in a possible implementation of the first aspect, the scrambling policy indication information further indicates at least one of the following information: a precision requirement of an AI model corresponding to the scrambled data, a scrambling level, a storage capability of the second communication device, or data scrambling permission.

The scrambling policy indication information in the foregoing technical solution further indicates capability information of the second communication device. In this way, it is more convenient for the first communication device to determine the scrambling policy applicable to the second communication device.

With reference to the first aspect, in a possible implementation of the first aspect, the scrambling policy indication information specifically indicates at least one scrambling policy, and the scrambling policy includes a scrambling algorithm.

The scrambling policy indication information in the foregoing technical solution may be sent by the second communication device to the first communication device. Therefore, based on the foregoing technical solution, the first communication device may directly use the scrambling policy indicated in the scrambling policy indication information, without consuming computing resources to determine the scrambling policy. In addition, the scrambling policy indicated by the scrambling policy indication information can be supported by the second communication device. Therefore, in the foregoing technical solution, a case in which the scrambling policy determined by the first communication device is not supported by the second communication device can be avoided.

With reference to the first aspect, in a possible implementation of the first aspect, the scrambling policy further includes at least one of the following information: a scrambling level, a precision requirement of an AI model corresponding to the scrambled data, or a type of data that is protected from being leaked.

The scrambling policy indication information in the foregoing technical solution further indicates a specific parameter of the scrambling policy. In this way, it is more convenient for the first communication device to determine the scrambling policy.

With reference to the first aspect, in a possible implementation of the first aspect, when the scrambling policy indication information indicates a plurality of scrambling policies, that the first communication device scrambles target data based on the scrambling policy indication information includes: The first communication device determines a target scrambling policy from the plurality of scrambling policies. The first communication device scrambles the target data according to the target scrambling policy.

With reference to the first aspect, in a possible implementation of the first aspect, before the first communication device obtains the scrambling policy indication information, the method further includes: The first communication device sends scrambling capability indication information to the second communication device, where the scrambling capability indication information indicates at least one of the following information: a scrambling algorithm supported by the first communication device, a scrambling level supported by the first communication device, a scrambled data resumption capability of the first communication device, or difference information between the target data and the scrambled data.

In the foregoing technical solution, the first communication device may send capability information of the first communication device to the second communication device. In this way, the first communication device and the second communication device may determine the scrambling policy that can be supported by the first communication device, and send the determined scrambling policy to the first communication device.

With reference to the first aspect, in a possible implementation of the first aspect, before the first communication device obtains the scrambling policy indication information, the method further includes: The first communication device sends privacy level information to the second communication device, where the privacy level information indicates a privacy level of the target data and/or a privacy level of the first communication device.

In the foregoing technical solution, the first communication device may send the privacy level to the second communication device. In this way, the first communication device and the second communication device may select an appropriate scrambling policy based on the privacy level. For example, a simple scrambling algorithm may be selected for data or a communication device with a low privacy level. A complex scrambling algorithm may be selected for data or a communication device with a high privacy level. In this way, computing resources consumed when the first communication device scrambles target data with a low privacy level can be reduced.

According to a second aspect, an embodiment of this application provides a data transmission method. The method includes: A second communication device determines scrambling policy indication information, where the scrambling policy indication information indicates a scrambling policy used by a first communication device. The second communication device sends the scrambling policy indication information to the first communication device. The second communication device receives scrambled data from the first communication device. The second communication device determines data of an AI model based on the scrambled data.

In the foregoing technical solution, when privacy data is transmitted between communication devices, the data of the AI model may be scrambled. In this way, transmission security of the data of the AI model can be ensured.

In some embodiments, the first communication device and the second communication device may be communication devices in a mobile communication network. For example, the first communication device may be a terminal device, and the second communication device may be a network device. For another example, the first communication device may be a network device, and the second communication device may be a terminal device.

When the first communication device is the network device and the second communication device is the terminal device, that the second communication device determines data of an AI model based on the scrambled data includes: The second communication device determines a parameter of the AI model or output data of the AI model based on the scrambled data.

A training process of the AI model may involve a large amount of data. The data may be obtained and processed by an organization, an institution, or a company at a high cost, and then a large amount of time and money are used to train the AI model to obtain related parameters. Therefore, once parameters of these AI models are leaked, huge losses may be caused to these organizations, institutions, or companies. Based on the foregoing technical solution, the parameter of the AI model and the output data of the AI model are scrambled, so that security of the data of the AI model in a transmission process can be protected.

When the first communication device is the terminal device and the second communication device is the network device, that the second communication device determines data of an AI model based on the scrambled data includes: The second communication device determines, based on the scrambled data, input data of the AI model, or training data used to train the AI model.

The input data or training data of the AI model usually includes user privacy data. In the foregoing technical solution, the data is scrambled, to protect privacy data of a user in a data transmission process.

With reference to the second aspect, in a possible implementation of the second aspect, the scrambling policy indication information specifically indicates a computing capability of the second communication device.

Based on the foregoing technical solution, the first communication device may determine the scrambling policy based on the computing capability of the second communication device. In this way, the determined scrambling policy can be applicable to the second communication device, and the second communication device can use the scrambled data determined by the first communication device.

With reference to the second aspect, in a possible implementation of the second aspect, the scrambling policy indication information further indicates at least one of the following information: a precision requirement of the AI model, a scrambling level, a storage capability of the second communication device, or data scrambling permission.

The scrambling policy indication information in the foregoing technical solution further indicates capability information of the second communication device. In this way, it is more convenient for the first communication device to determine the scrambling policy applicable to the second communication device.

With reference to the second aspect, in a possible implementation of the second aspect, the scrambling policy indication information specifically indicates at least one scrambling policy, and the scrambling policy includes a scrambling algorithm.

The scrambling policy indication information in the foregoing technical solution may be sent by the second communication device to the first communication device. Therefore, based on the foregoing technical solution, the first communication device may directly use the scrambling policy indicated in the scrambling policy indication information, without consuming computing resources to determine the scrambling policy. In addition, the scrambling policy indicated by the scrambling policy indication information can be supported by the second communication device. Therefore, in the foregoing technical solution, a case in which the scrambling policy determined by the first communication device is not supported by the second communication device can be avoided.

With reference to the second aspect, in a possible implementation of the second aspect, the scrambling policy further includes at least one of the following information: a scrambling level, a precision requirement of the AI model, or a type of data that is protected from being leaked.

The scrambling policy indication information in the foregoing technical solution further indicates a specific parameter of the scrambling policy. In this way, it is more convenient for the first communication device to determine the scrambling policy.

With reference to the second aspect, in a possible implementation of the second aspect, before the second communication device determines the scrambling policy indication information, the method further includes: The second communication device receives scrambling capability indication information from the first communication device, where the scrambling capability indication information indicates at least one of the following information: a scrambling algorithm supported by the first communication device, a scrambling level supported by the first communication device, a scrambled data resumption capability of the first communication device, or difference information between data that needs to be scrambled and the scrambled data. That the second communication device determines scrambling policy indication information includes: The second communication device determines the scrambling policy indication information based on the scrambling capability indication information.

In the foregoing technical solution, the first communication device may send capability information of the first communication device to the second communication device. In this way, the first communication device and the second communication device may determine the scrambling policy that can be supported by the first communication device, and send the determined scrambling policy to the first communication device.

With reference to the second aspect, in a possible implementation of the second aspect, before the second communication device determines the scrambling policy indication information, the method further includes: The second communication device receives privacy level information from the first communication device, where the privacy level information indicates a privacy level of the scrambled data and/or a privacy level of the first communication device. That the second communication device determines the scrambling policy indication information based on the scrambling capability indication information includes: The second communication device determines the scrambling policy indication information based on the scrambling capability indication information and the privacy level information.

In the foregoing technical solution, the first communication device may send the privacy level to the second communication device. In this way, the first communication device and the second communication device may select an appropriate scrambling policy based on the privacy level. For example, a simple scrambling algorithm may be selected for data or a communication device with a low privacy level. A complex scrambling algorithm may be selected for data or a communication device with a high privacy level. In this way, computing resources consumed when the first communication device scrambles target data with a low privacy level can be reduced.

According to a third aspect, an embodiment of this application provides a communication device. The communication device includes a unit configured to implement any one of the first aspect or the possible implementations of the first aspect.

According to a fourth aspect, an embodiment of this application provides a communication device. The communication device includes a unit configured to implement any one of the second aspect or the possible implementations of the second aspect.

According to a fifth aspect, an embodiment of this application provides a communication device. The communication device includes a processor. The processor is configured to: be coupled to a memory, and read and execute instructions and/or program code in the memory, to perform any one of the first aspect or the possible implementations of the first aspect.

According to a sixth aspect, an embodiment of this application provides a communication device. The communication device includes a processor. The processor is configured to: be coupled to a memory, and read and execute instructions and/or program code in the memory, to perform any one of the second aspect or the possible implementations of the second aspect.

According to a seventh aspect, an embodiment of this application provides a chip system. The chip system includes a logic circuit. The logic circuit is configured to: be coupled to an input/output interface, and transmit data through the input/output interface, to perform any one of the first aspect or the possible implementations of the first aspect.

According to an eighth aspect, an embodiment of this application provides a chip system. The chip system includes a logic circuit. The logic circuit is configured to: be coupled to an input/output interface, and transmit data through the input/output interface, to perform any one of the second aspect or the possible implementations of the second aspect.

According to a ninth aspect, an embodiment of this application provides a computer-readable storage medium. The computer-readable storage medium stores program code. When the computer storage medium is run on a computer, the computer is enabled to perform any one of the first aspect or the possible implementations of the first aspect.

According to a tenth aspect, an embodiment of this application provides a computer-readable storage medium. The computer-readable storage medium stores program code. When the computer storage medium is run on a computer, the computer is enabled to perform any one of the second aspect or the possible implementations of the second aspect.

According to an eleventh aspect, an embodiment of this application provides a computer program product. The computer program product includes computer program code. When the computer program code is run on a computer, the computer is enabled to perform any one of the first aspect or the possible implementations of the first aspect.

According to a twelfth aspect, an embodiment of this application provides a computer program product. The computer program product includes computer program code. When the computer program code is run on a computer, the computer is enabled to perform any one of the second aspect or the possible implementations of the second aspect.

**BRIEF DESCRIPTION OF DRAWINGS**

FIG. 1 is a diagram of an AI module according to an embodiment of this application;
FIG. 2 is a schematic flowchart of a data transmission method according to an embodiment of this application;
FIG. 3 is a schematic flowchart of another data transmission method according to an embodiment of this application;
FIG. 4 is a schematic flowchart of another data transmission method according to an embodiment of this application;
FIG. 5 is a schematic flowchart of another data transmission method according to an embodiment of this application;
FIG. 6 is a block diagram of a structure of a communication device according to an embodiment of this application;
FIG. 7 is a block diagram of a structure of another communication device according to an embodiment of this application;

FIG. 8 is a diagram of a structure of a terminal device; and

FIG. 9 is a diagram of a structure of a network device.

## DESCRIPTION OF EMBODIMENTS

The following describes technical solutions of embodiments of this application with reference to accompanying drawings.

Terms used in the following embodiments are merely intended to describe specific embodiments, but are not intended to limit this application. The terms "one", "a", and "the" in singular forms used in the specification and the appended claims of this application are intended to include a form like "one or more", unless otherwise specified in the context clearly. It should be further understood that, in the following embodiments of this application, "at least one", "at least one item", and "one or more" mean one, two, or more. "First", "second", and various numbers are merely used for differentiation for ease of description, but are not intended to limit the scope of embodiments of this application. "And/or" describes a correspondence between objects that correspond to each other, and indicates that three relationships may exist. For example, "A and/or B" may indicate the following three cases: Only A exists, only B exists, and both A and B exist, where A and B may be singular or plural. The character "/" generally indicates an "or" relationship between associated objects. Sequence numbers of the following processes do not mean execution orders. The execution orders of the processes should be determined based on functions and internal logic of the processes, and should not be construed as any limitation on implementation processes of embodiments of this application. For example, in embodiments of this application, the words "301", "401", "501", and the like are merely identifiers for ease of description, and are not intended to limit an execution order of steps.

Reference to "an embodiment", "some embodiments", or the like described in this specification indicates that one or more embodiments of this application include a specific feature, structure, or characteristic described with reference to embodiments. In this application, the word "example", "for example", or the like is used to give an example, an illustration, or a description. Any embodiment or design solution described as an "example" or "for example" in this application should not be explained as being more preferred or having more advantages than another embodiment or design solution. Exactly, use of the word such as "example" or "for example" is intended to present a related concept in a specific manner. The terms "include", "comprise", "have", and their variants all mean "include but are not limited to", unless otherwise specifically emphasized in another manner. In embodiments of this application, descriptions such as "when...", "in a case of...", and "if" all mean that a device performs corresponding processing in an objective situation, but are not limited to time, and the device is not required to perform a determining action during implementation. This does not mean that there is another limitation.

In this application, "indicate" may include "directly indicate" and "indirectly indicate". When a piece of indication information is described as indicating A, the indication information may directly indicate A or indirectly indicate A, but it does not necessarily indicate that the indication information carries A. In embodiments of this application, descriptions such as "when... ", "in a case of...", and "if" all mean that a device performs corresponding processing in an objective situation, but are not limited to time, and the device is not required to perform a determining action during implementation. This does not mean that there is another limitation.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, Wi-MAX) communication system, a 5th generation (5th generation, 5G) system or a new radio (new radio, NR) system, a future 6th generation (6th generation, 6G) system, and a non-terrestrial network (non-terrestrial network, NTN) system like an inter-satellite communication system and a satellite communication system. The satellite communication system includes a satellite base station and a terminal device. The satellite base station provides a communication service for the terminal device. The satellite base station may also communicate with a base station. A satellite may serve as a base station, or may serve as a terminal device. The satellite may be an uncrewed aerial vehicle, a hot air balloon, a low-orbit satellite, a medium-orbit satellite, a high-orbit satellite, or the like. The satellite may also refer to a non-terrestrial base station, a non-terrestrial device, or the like.

Embodiments of this application may be applied to a terminal device. The terminal device may be a wireless terminal or a wired terminal. The wireless terminal may be a device that provides a user with voice and/or data connectivity, a handheld device having a wireless connection function, or another processing device connected to a wireless modem. The wireless terminal may communicate with one or more core networks via a radio access network (radio access network, RAN for short). The wireless terminal may be a mobile terminal, for example, a mobile phone (or also referred to as a "cellular" phone) and a computer having a mobile terminal, for example, may be a portable, pocket-sized, handheld, computer built-in, or vehicle-mounted mobile apparatus, which exchanges voice and/or data with the radio access network. For example, the wireless terminal may be a device, for example, a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The wireless terminal may also be referred to as a system, a subscriber unit (subscriber unit, SU), a subscriber station (subscriber station, SS), a mobile station (mobile station, MB), a mobile (mobile), a remote station (remote station, RS), an access point (access point, AP), a remote terminal (remote terminal, RT), an access terminal (access terminal, AT), a user terminal (user terminal, UT), a user agent (user agent, UA), a terminal device (user device, UD), or a user equipment (user equipment, UE).

In embodiments of this application, an apparatus configured to implement a function of the terminal device may be a terminal device, or may be an apparatus that can support the terminal device in implementing the function, for example, a chip system. The apparatus may be installed in the terminal device, or may be used together with the terminal device. In embodiments of this application, the chip system may include a chip, or may include a chip and another discrete component.

The technical solutions in embodiments of this application may be further applied to an access network device. The access network device may be a device that enables a terminal device to access a wireless network. The access network device may also be referred to as a radio access network (radio access network, RAN) node, a radio access network device, or a network device. For example, the access network device may be a base station.

In embodiments of this application, the base station may cover any of the following names in a broad sense, or may be replaced with the following names, for example, a NodeB (NodeB), an evolved base station (evolved NodeB, eNB), a base station gNB in a 5G network, a relay station, an access point, a transmitting and receiving point (transmitting and receiving point, TRP), a transmitting point (transmitting point, TP), a master station (master eNodeB, MeNB), a secondary station (secondary eNodeB, SeNB), a multi-standard radio (multi-standard radio, MSR) node, a home base station, a network controller, an access node, a radio node, an access point (access point, AP), and a transmission node, a transceiver node, a baseband unit (baseband unit, BBU), a remote radio unit (remote radio unit, RRU), an active antenna unit (active antenna unit, AAU), a radio head (remote radio head, RRH), and a positioning node. The base station may be a macro base station, a micro base station, a relay node, a donor node, or the like, or a combination thereof. The base station may alternatively be a communication module, a modem, or a chip that is disposed in the device or apparatus. The base station may alternatively be a network side device in a 6G network, a device that undertakes a base station function in a future communication system, or the like. The base station may support networks of a same access technology or different access technologies.

The base station may be an architecture in which a central unit (central unit, CU) is separated from a distributed unit (distributed unit, DU). The RAN may be connected to a core network (which, for example, may be a long term evolution (long term evolution, LTE) core network, or may be a 5G core network). It may be understood that the base station is divided into the CU and the DU from a perspective of a logical function. The CU and the DU may be physically separated or deployed together. A plurality of DUs may share one CU. One DU may alternatively be connected to a plurality of CUs. The CU and the DU may be connected through an interface, for example, an F1 interface. The CU and the DU may be divided based on a protocol layer of the wireless network. For example, a possible division manner is that the CU is configured to perform functions of a radio resource control (radio resource control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a medium access control (medium access control, MAC) layer, a physical (physical) layer, and the like. It may be understood that, division into processing functions of the CU and the DU based on the protocol layers is merely an example, and there may be other division. For example, the CU or the DU may have functions of more protocol layers through division. For example, the CU or the DU may alternatively have some processing functions of the protocol layers through division. In a design, some functions of the RLC layer and functions of protocol layers above the RLC layer are set on the CU, and remaining functions of the RLC layer and functions of protocol layers below the RLC layer are set on the DU. In another design, functions of the CU or the DU may alternatively be divided based on a service type or another system requirement. For example, division is performed based on a delay, a function whose processing time needs to satisfy a delay requirement is set on the DU, and a function whose processing time does not need to satisfy the delay requirement is set on the CU. In another design, the CU may alternatively have one or more functions of the core network. One or more CUs may be set in a centralized manner or a distributed manner. For example, the CUs may be set on a network side for ease of centralized management. The DU may have a plurality of radio frequency functions, or the radio frequency functions may be set remotely.

A function of the CU may be implemented by one entity or different entities. For example, the function of the CU may be further divided, for example, separated into a control plane (control plane, CP) and a user plane (user plane, UP), namely, the control plane (CU-CP) of the CU and the user plane (CU-UP) of the CU. For example, the CU-CP and the CU-UP may be implemented by different functional entities, and are connected through an E1 interface. The CU-CP and the CU-UP may be coupled to the DU, to jointly perform functions of the base station. The control plane CU-CP of the CU further includes a further division architecture. In other words, an existing CU-CP is further divided into a CU-CP 1 and a CU-CP 2. The CU-CP 1 includes various radio resource management functions, and the CU-CP 2 includes only an RRC function and a PDCP-C function (namely, a basic function of control plane signaling at the PDCP layer).

The base station may be fixed or mobile. For example, a helicopter or an uncrewed aerial vehicle may be configured as a mobile base station, and one or more cells may move based on a position of the mobile base station. In another example, a helicopter or an uncrewed aerial vehicle may be configured as a device for communicating with another base station.

Operation, administration, and maintenance (operation, administration, and maintenance, OAM) means that, network management is usually classified into three categories based on an actual requirement of an operator on network operation: operation (operation), administration (administration), and maintenance (maintenance), OAM for short. The OAM is also referred to as an OAM entity or function. Operation is to analyze, forecast, plan, and configure routine network and services. Maintenance mainly refers to routine operation activities such as network and service testing and fault management. The OAM can detect a network running status, optimize network connections and performance, improve network running stability, and reduce network maintenance costs.

An AI model, also referred to as an AI algorithm (or an AI operator), is a collective term of mathematical algorithms constructed according to artificial intelligence principles and is also a basis for using AI to resolve a specific problem. A type of the AI model is not limited in embodiments of this application. For example, the AI model may be a machine learning model, a deep learning model, a reinforcement learning model, or federated learning.

Machine learning is a method for implementing artificial intelligence. An objective of the method is to design and analyze some algorithms (namely, models) that enable a computer to automatically "learn". The designed algorithms are referred to as machine learning models. The machine learning model is a type of algorithm that automatically analyzes data to obtain a rule and predict unknown data according to the rule. There are various types of machine learning models. The machine learning models may be classified into the following types depending on whether a label corresponding to training data needs to be depended on during model training: 1. supervised learning model; and 2. unsupervised learning model.

Deep learning is a new technical field generated in a machine learning research process. Specifically, deep learning is a method for performing deep representation learning on data in machine learning. Deep learning is for interpreting the data by setting up a neural network that simulates a human brain to perform analysis and learning. In the machine learning method, almost all features need to be determined by industry experts, and then the features are encoded. However, a deep learning algorithm attempts to learn features from data. An algorithm designed based on a deep learning idea is referred to as a deep learning model.

Reinforcement learning is a special field in machine learning, and is a process of continuously learning an optimal policy, making sequence decisions, and obtaining maximum returns through interaction between an agent (agent) and an environment (environment). In general, reinforcement learning is learning "what to do (that is, how to map a current situation to an action) to maximize a digitalized benefit signal". The agent is not told what actions to take, but tries to find out which actions will produce the most benefits. Reinforcement learning is different from supervised learning and unsupervised learning in a machine learning field. Supervised learning is a process of learning from externally provided training data with labels (task-driven), and unsupervised learning is a process of searching for implicit structures in unlabeled data (data-driven). Reinforcement learning is a process of searching for a better solution through "exploration". The agent develops existing experience to gain benefits, and explores, so that better action selection space can be obtained in the future (that is, learning from mistakes). An algorithm designed based on reinforcement learning is referred to as a reinforcement learning model.

Federated learning (also referred as collaborative learning) is a machine learning technology that can train algorithms, without exchanging them, on a plurality of distributed edge devices or servers that hold local data samples. This method is in contrast to a conventional centralized machine learning technology. To be specific, in centralized machine learning, all local data sets are uploaded to a server to complete training. Federated learning enables a plurality of participants to construct a common, robust machine learning model without sharing data, so that key problems such as data privacy, data security, data access permission, and access to heterogeneous data are allowed to be addressed.

Any AI model needs to be trained before being used to resolve a specific technical problem. AI model training is a process of calculating training data by using a specified initial model, and adjusting a parameter in the initial model by using a method based on a calculation result, so that the model gradually learns a rule and has a specific function. After training, an AI model with a stable function can be used for inference. AI model inference is a process of calculating input data by using a trained AI model to obtain a predicted inference result (also referred to as output data).

An AI module is a module that has an AI learning and computing capability. In a wireless communication system, the AI module may be located in an OAM, or may be located in a gNB (a separation architecture is located in a CU), or may be located in some UEs, or may be independently a network element entity. A main function of the AI module in the wireless communication system is to perform a model setup, training approximation, and reinforcement learning, and a series of AI computing based on input data (for example, in the wireless communication system, the input data may be network running data provided by a RAN side or monitored by the OAM, such as network load and channel quality). A trained model provided by the AI module has a prediction function for a network change on the RAN side, and may be usually used for load prediction, UE track prediction, and the like. In addition, the AI module may further perform policy inference from perspectives of network energy saving, mobility optimization, and the like based on a result of predicting RAN network performance by using the trained model, to obtain a proper and efficient energy saving policy, mobility optimization policy, and the like. When the AI module is located in the OAM, a current northbound interface may be reused for communication between the AI module and the gNB on the RAN side. When the AI module is located in the gNB or the CU, a current F1, Xn, Uu, or the like interface may be reused. When the AI module is an independent network entity, a communication link to the OAM, the RAN side, or the like needs to be reset up, for example, a wired link or a wireless link.

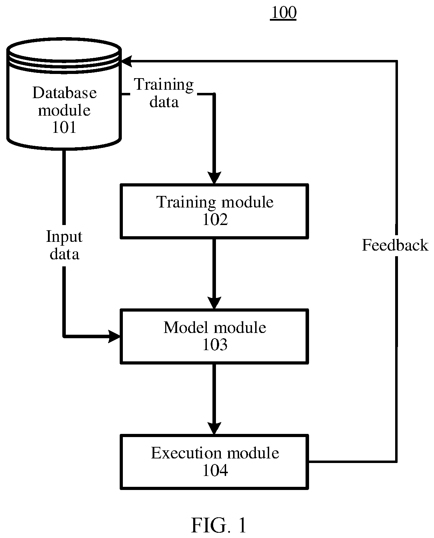

FIG. 1 is a diagram of an AI module according to an embodiment of this application. The AI module 100 shown in FIG. 1 includes a database module 101, a training module 102, a model module 103, and an execution module 104.

The database module 101 may store training data. Alternatively, the training data may come from a terminal device. The training data may come from a network device. For example, the training data may come from a base station (for example, a gNB) or a functional unit (for example, a CU or a DU) that forms the base station. For another example, the training data may come from a network device other than the base station, for example, a gateway, a management entity (for example, mobility management (mobility management entity, MME)), or a core network device.

The training module 102 analyzes the training data provided by the database module 101, to obtain an AI model. The training module 102 may send a trained AI model to the model module 103. After AI model training is completed, the training module 102 may further update the trained model, and send, to the model module 103, an update parameter used to update the model. In a process of running the AI model, the model module 103 may further collect some running data of the model, and send the running data to the training module 102. The training module 102 may update the AI model based on the running data.

The model module 103 may determine output data based on the AI model and input data. The output data may include a prediction result of network running that is obtained based on the input data and the AI model. The output data may further include an adjustment policy determined based on the input data and the AI model. In some embodiments, the network device and/or the terminal device may directly send the input data to the model module 103. In some other embodiments, the database module 101 may alternatively collect data from the network device and/or the terminal device, determine the input data, and send the input data to the model module 103.

The execution module 104 may be configured to execute the adjustment policy determined by the model module 103. The execution module 104 may further collect specific performance of a network to which the adjustment policy is applied, for example, a performance parameter in the network, and feed back the information to the data module 101. The database module 101 may store the feedback information. The feedback information may be used for subsequent model training or improvement of the AI model.

The following describes application of AI to a mobile communication system. In the mobile communication system, an AI model can be used to intelligently collect and analyze data, to improve network performance and user experience.

For example, AI can be applied to channel state information (channel state information, CSI) feedback enhancement (CSI feedback enhancement). CSI is a channel attribute of a communication link, and is channel quality information reported by a terminal device to a base station. The terminal device reports downlink channel quality information to the base station, so that a more appropriate modulation and coding scheme (modulation and coding scheme, MCS) is selected for the terminal device. In this way, a transformed radio channel can be better adapted.

For another example, AI may further be applied to beam management (beam management, BM). The BM is mainly used to discover the strongest transmit/receive beam pair (beam pair). AI-based beam prediction can improve prediction accuracy.

For another example, AI may further be applied to positioning accuracy enhancement (positioning accuracy enhancement). Positioning accuracy is related to a quantity of total radiated power (total radiated power, TRP) antennas. Generally, a larger quantity of TRP antennas indicates higher positioning accuracy. The AI model can be used to achieve high positioning accuracy with a small quantity of TRP antennas. For example, a conventional positioning method, for example, a time difference of arrival (time difference of arrival, TDOA) or a round trip time (round trip time, RTT), depends on information collection of a line of sight (line of sight, LOS) path between a terminal device and a TRP antenna. In an indoor scenario, there may be insufficient line of sight paths, and the conventional positioning method cannot work well. Therefore, AI-based positioning can improve positioning accuracy in a scenario with a small quantity of line of sight paths.

For another example, AI may further be applied to network energy saving (network energy saving). Network energy saving may be adjusted through cell activation/deactivation (cell activation/deactivation), load reduction, coverage improvement, or other RAN settings. An optimal energy saving decision depends on factors such as load statuses of different RAN nodes, a RAN node capability, a key performance indicator (key performance indicator, KPI) requirement, a quality of service (quality of service, QoS) requirement, a quantity of active users, mobility of a terminal device, and cell utilization. However, improving network energy efficiency is a very complex process. Incorrect cell shutdown, incorrect traffic offloading operations, and the like may cause network performance deterioration and even energy efficiency deterioration. An AI technology can be used to optimize an energy saving decision by utilizing data collected in a RAN network. An AI algorithm can predict energy efficiency and a load status in a next periodicity, which can be used to better determine to activate/deactivate a cell to save energy. Based on predicted load, a system can dynamically configure an energy saving policy to balance system performance and energy efficiency and reduce energy consumption.

For another example, AI may further be applied to load balancing (load balancing). An objective of load balancing is to enable load to be evenly distributed between cells and between areas in a cell, or transfer some traffic from a congested cell, or enable a terminal device to offload traffic on a cell, a carrier, or an access standard, to improve network performance. This can be achieved by optimizing a handover parameter and a handover action. Optimization automation can provide high-quality user experience, improve a system capacity, and reduce manual intervention on network management and an optimization task to a greatest extent. Currently, a load balancing decision based on a cell load status at a current/past moment is insufficient. In addition, overall network and service performance cannot be ensured during load balancing. Therefore, an AI model-based solution can be introduced to improve load balancing performance. For example, measurement, feedback, and historical data of a user and a network node are input into the AI model to improve the load balancing performance, provide higher-quality user experience, and improve a system capacity.

For another example, AI may further be applied to mobility optimization (mobility optimization). Mobility management is a solution that ensures service continuity during movement of a terminal device by reducing call drops, radio link failures (radio link failures, RLFs), unnecessary handovers, and ping-pong effects to a greatest extent. For a future high-frequency network, as a coverage area of a single node decreases, a frequency at which a terminal device switches between nodes becomes very high, especially for a high-mobility terminal device. In addition, for an application that has a strict requirement on QoS such as reliability and a delay, quality of experience (quality of experience, QoE) is sensitive to handover performance. Therefore, mobility management need to avoid a handover failure and reduce a delay in a handover process. However, for a conventional method, it is challenging to implement a handover with almost zero failure in a trial-and-error-based solution. Therefore, an AI-based solution can be used to enhance mobility management in the following aspects: (1) reduction of a probability of unexpected events; (2) location/mobility/performance prediction of a terminal device; and (3) traffic diversion.

The following describes common privacy protection computation solutions. A process of performing privacy protection computation on data may be referred to as scrambling. For ease of description, plaintext data before scrambling may be referred to as target data, and a scrambled result obtained by scrambling the target data may be referred to as scrambled data. Currently, mainstream privacy protection computation solutions (such as differential privacy, homomorphic encryption, and secure multi-party computation) focus on cryptography. Data can be securely transmitted in an "available and invisible" manner based on ensured data privacy security.

Differential privacy: In an interactive differential privacy protection framework, a user submits a query request to a data owner through a query interface. The data owner queries a source data set based on the query request, adds noise disturbance to a query result, and then feeds back the query result to the user. The differential privacy may have different scrambling levels. A higher scrambling level indicates higher protection strength of the differential privacy. Protection strength of the differential privacy is related to an amount of disturbance or noise that can be added. For example, considering a $(\varepsilon, \delta)$-differential privacy solution based on a Gaussian mechanism, added Gaussian noise and a privacy protection degree vary with selected values of $\delta$. A smaller selected value of $\delta$ indicates a better privacy protection degree, and it is more difficult to decipher scrambled data. On the contrary, a larger selected value of $\delta$ indicates a poorer privacy protection degree, and it is easier to decipher scrambled data. In this case, the differential privacy parameter $\delta$ may reflect a scrambling level of the differential privacy. In some embodiments, a relationship between the differential privacy parameter $(\varepsilon, \delta)$ and a Gaussian noise distribution standard deviation $\sigma$ satisfies the following relationship:

$$\delta \geq \frac{5}{4} \times e^{\alpha}$$

$$\alpha = -\left(\sigma \times \varepsilon\right)^{2} / 2$$

, where $\varepsilon < 1$. A person skilled in the art may understand that, in addition to the Gaussian mechanism, a mechanism for adding noise further includes a Laplace mechanism, an exponential mechanism, a hybrid mechanism, and the like.

Homomorphic encryption: An encryption algorithm that satisfies a homomorphic operation property of ciphertext. After data is homomorphically encrypted, specific computation is performed on the ciphertext, to obtain a ciphertext computation result. This is equivalent to directly performing same computation on plaintext data after corresponding homomorphic decryption. Similarly, homomorphic encryption may have different scrambling levels. A higher scrambling level indicates higher protection strength of homomorphic encryption. Homomorphic encryption includes fully homomorphic encryption (fully homomorphic encryption, FHE) and somewhat homomorphic encryption (somewhat homomorphic encryption, SWHE). In actual application, FHE has high computation overheads, and SWHE has a limited support capability but low overheads. Currently, there are many algorithms that satisfy additive homomorphism or multiplicative homomorphism. For example, a classic Rivest Shamir Adleman (Rivest Shamir Adleman, RSA) algorithm is an encryption method that satisfies multiplicative homomorphism. The RSA algorithm is used as an example. Password strength is related to a key length (generally, a bit length of a modulus value). For example, from RSA-1024 to RSA-3072, the bit length of the modulus value increases by 200%, and the password strength accordingly increases by 50%. Therefore, the protection strength of homomorphic encryption is related to the key length. A longer key length indicates a higher encryption degree (or a higher degree at which original data is scrambled), a higher scrambling level, and higher privacy protection strength.

Secure multi-party computation: Multi-party security computation may be considered as a protocol set. The protocol set can ensure that computation of aggregated data is allowed without exposing monolithic data. Main technologies used are secret sharing, oblivious transfer, a garbled circuit, homomorphic encryption, zero knowledge proof, and so on. As mentioned above, secure multi-party computation is the protocol set. Therefore, a scrambling level of secure multi-party computation may be embodied by using a key technology used in a secure multi-party algorithm. For example, if the key technology used in secure multi-party computation is homomorphic encryption, a scrambling level of the secure multi-party algorithm is a scrambling level of homomorphic encryption.

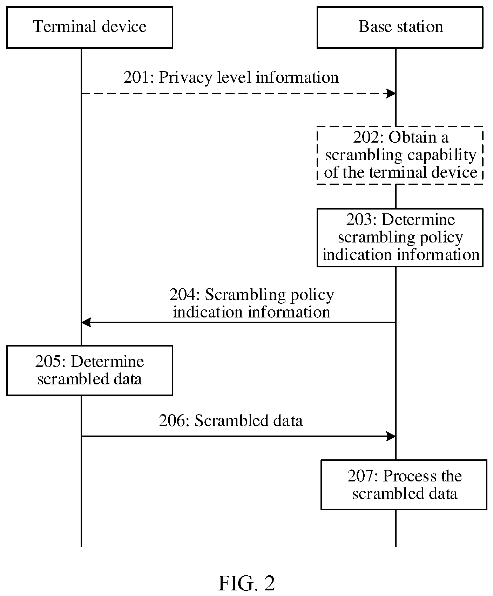

FIG. 2 is a schematic flowchart of a data transmission method according to an embodiment of this application.

201: A terminal device sends privacy level information to a base station.

In some embodiments, the privacy level information may indicate a privacy level of data (that is, target data) that needs to be scrambled by the terminal device and then sent to the base station.

In some embodiments, the target data may be data generated in a running process of the terminal device, and the data may be used as training data of an AI model and/or input data of the AI model.

The target data may vary based on different application scenarios.

A channel state information (channel state information, CSI) feedback enhancement (CSI feedback enhancement) scenario is used as an example. The terminal device may perform channel estimation based on a received channel state information-reference signal (channel state information-reference signal, CSI-RS), to obtain a channel estimation result (for example, a channel matrix or an eigenvector obtained by performing characteristic decomposition on the channel matrix). The channel estimation result may be used as the training data of the AI model or the input data of the AI model. In this case, the target data may be the channel estimation result.

A beam management (beam management, BM) scenario is used as an example. Information such as reference signal received power (reference signal received power, RSRP) and an ideal beam identifier may be used as the training data of the AI model or the input data of the AI model. In this case, the target data may be information such as RSRP measured by the terminal device and an ideal beam identifier selected by the terminal device.

In a mobility optimization or load balancing scenario, information such as location information of the terminal device (for example, longitude and latitude coordinates of the terminal device and location information of the terminal device relative to the base station) and a movement track of the terminal device may be used as the training data of the AI model or the input data of the AI model. In this case, the target data may include information such as the location information and the movement track of the terminal device.

Different types of data have different privacy requirements. For example, Table 1 shows privacy requirements of different data.

Table 1

| Privacy level | Data type |
|---|---|
| 1 | Channel estimation result |
| 2 | RSRP |
| 3 | Ideal beam identifier |
| 4 | Location information and movement track |

As shown in Table 1, a higher value of the privacy level indicates a higher privacy level. As shown in Table 1, a privacy level of the RSRP is higher than a privacy level of the channel estimation result, a privacy level of the ideal beam identifier is higher than the privacy level of the RSRP, and a privacy level of location confidence and the movement track is higher than the privacy level of the ideal beam identifier. It may be understood that the relationship between the privacy level and the data type and a total quantity of levels of privacy levels shown in Table 1 are merely examples, but are not intended to limit this embodiment of this application.

In some embodiments, the privacy level information may directly include the privacy level of the target data. For example, if the target data is the location information of the terminal device, the privacy level information may directly include a privacy level corresponding to the location information, that is, a privacy level 4.

In some other embodiments, the privacy level information may include a type of the target data. In this case, the base station may determine the privacy level of the target data based on the correspondence between the privacy level and the data type. For example, the privacy level information indicates that the target data is the location information of the terminal device. In this case, the base station may determine, based on the correspondence between the privacy level and the data type, that the privacy level of the target data is 4.

Certainly, in some other embodiments, the privacy level information may include both a privacy level of the target data and a type of the target data.

In some other embodiments, the privacy level information may indicate a privacy level of the terminal device.

Different types of terminal devices may have different types of privacy levels. Table 2 shows a correspondence between a type of the terminal device and the privacy level.

Table 2

| Privacy level | Device type |
|---|---|
| 1 | Remote temperature collection device |
| 2 | Data collection device for remote three meters (electricity meter, water meter, and gas meter) |
| 3 | Mobile phone and tablet computer |
| 4 | Mobile POS machine |

Similar to Table 1, in Table 2, a higher value of the privacy level indicates a higher privacy level. As shown in Table 2, a privacy level of the data collection device for remote three meters (electricity meter, water meter, and gas meter) is higher than a privacy level of the remote temperature collection device, a privacy level of the mobile phone and the tablet computer is higher than the privacy level of the data collection device for remote three meters (electricity meter, water meter, and gas meter), and a privacy level of the mobile point of sale (point of sale, POS) machine is higher than the privacy level of the mobile phone and the tablet computer. It may be understood that the relationship between the privacy level and the device type and a total quantity of levels of privacy levels shown in Table 2 are merely examples, but are not intended to limit this embodiment of this application.

In some embodiments, the privacy level information may directly include the privacy level of the terminal device. For example, if the terminal device is the mobile POS machine, the privacy level information may directly include a privacy level corresponding to the mobile POS machine, that is, a privacy level 4.

In some other embodiments, the privacy level information may include a type of the terminal device. In this case, the base station may determine the privacy level of the target data based on the correspondence between the privacy level and the device type. For example, the privacy level information may indicate that the terminal device is a mobile POS. In this case, the base station may determine, based on the correspondence between the privacy level and the device type, that a privacy level of the type of the terminal device is 4.

Certainly, in some other embodiments, the privacy level information may include both the privacy level of the terminal device and a type of the terminal device.

In some embodiments, the privacy level information may be a piece of dedicated information. For example, after the terminal device sets up an RRC connection to the base station, if the terminal device needs to send scrambled data to the base station, the terminal device may send the privacy level information to the base station before sending the scrambled data.

In some other embodiments, the privacy level information may be a non-dedicated message. For example, in a process of setting up the RRC connection to the base station, the terminal device may send an RRC resume complete (RRC resume complete) message to the base station. The RRC resume complete message carries type information of the terminal device. In this case, the base station may determine the privacy level of the terminal device based on the type of the terminal device that is carried in the RRC resume complete message. It may be understood that, in addition to the RRC resume complete message, another RRC message may also be used to carry the type information of the terminal device, for example, an RRC setup complete (RRC setup complete) message, an RRC reestablishment complete (RRC reestablishment complete) message, or an RRC reconfiguration complete (RRC reconfiguration complete) message. For another example, the terminal device may send the privacy level information together with other information to the base station. For example, the terminal device may send the privacy level information together with scrambling capability information of the terminal device to the base station.

202: The base station obtains a scrambling capability of the terminal device.

The scrambling capability of the terminal device includes at least one of the following information: a scrambling algorithm supported by the terminal device, a scrambling level supported by the terminal device, a scrambled data resumption capability of the terminal device, or difference information between the target data and the scrambled data.

The scrambling algorithm supported by the terminal device is a privacy protection computation solution that can be used by the terminal device, for example, whether the terminal device supports differential privacy, whether the terminal device supports homomorphic encryption, and whether the terminal device supports secure multi-party computation.

The scrambling level supported by the terminal device may be a maximum scrambling level of the scrambling algorithm supported by the terminal device. For example, if the terminal device supports differential privacy, the scrambling level supported by the terminal device may include a Gaussian noise standard deviation. For example, if a differential privacy parameter $\delta$ of Gaussian noise supported by the terminal device in the scrambling capability is $1e^{-5}$, the terminal device can support a standard deviation less than or equal to $1e^{-5}$. For example, the terminal device may support addition of Gaussian noise whose differential privacy parameter $\delta$ is equal to $1e^{-5}$, $1e^{-6}$, or $1e^{-7}$.

The scrambled data resumption capability of the terminal device indicates a scrambling level of scrambled data that can be resumed by the terminal device. For example, scrambled data of how much noise/disturbance can be resumed by the terminal device.

The difference information between the target data and the scrambled data refers to a degree of differentiation between data before and after scrambling (that is, a degree of differentiation between the target data and the scrambled data), for example, may be a variance, a standard deviation, a minimum mean square error, or the like of the data before and after scrambling.

In some embodiments, the base station may send scrambling capability request information to the terminal device, where the scrambling capability request information is used to request to obtain the scrambling capability of the terminal device. After receiving the scrambling capability request information, the terminal device may send scrambling capability indication information to the base station. The scrambling capability indication information indicates the scrambling capability of the terminal device.

In some other embodiments, the terminal device may actively send the scrambling capability indication information to the base station after setting up the RRC connection to the base station.

The scrambling capability indication information may indicate any one or more of scrambling capabilities of the terminal device. In other words, the scrambling capability indication information may indicate one or more of the following information: the scrambling algorithm supported by the terminal device, the scrambling level supported by the terminal device, the scrambled data resumption capability of the terminal device, or the difference information between the target data and the scrambled data.

In some embodiments, if the scrambling capability indication information does not indicate some scrambling capabilities, it may be considered that the terminal device supports all optional solutions of the capabilities. For example, if the scrambling capability indication information does not indicate the scrambling algorithm supported by the terminal device, the base station may determine that the terminal device supports all scrambling algorithms. For another example, if the scrambling capability indication information does not indicate the scrambling level supported by the terminal device, the base station may determine that the terminal device supports all scrambling levels.

In some other embodiments, if the scrambling capability indication information does not indicate some scrambling capabilities, it may be considered that the terminal device supports a default solution within the capability or a solution that requires a lowest computing capability. For example, assuming that a default scrambling algorithm is differential privacy, if the scrambling capability indication information does not indicate the scrambling algorithm supported by the terminal device, the base station may determine that the terminal device only supports differential privacy. For another example, if the scrambling capability indication information does not indicate the scrambling level supported by the terminal device, the base station may determine that the terminal device only supports a lowest scrambling level.

In some other embodiments, there is a correspondence between the type of the terminal device and the scrambling capability of the terminal device. For example, the mobile POS machine may support differential privacy and homomorphic encryption. The mobile phone and the tablet computer may support differential privacy, homomorphic encryption, and secure multi-party computation. A remote information collection device only supports differential privacy. The correspondence may be stored in the base station. In this case, the base station may determine the scrambling capability of the terminal device based on the type of the terminal device. For example, the base station may obtain a device type of the terminal device based on the privacy level information, and then determine the scrambling capability of the terminal device based on the device type of the terminal device. For another example, the base station may determine the type of the terminal device based on an RRC message (for example, the RRC resume complete message, the RRC setup complete message, the RRC reestablishment complete message, or the RRC reconfiguration complete message) obtained in the process of setting up the RRC connection, and then determine the scrambling capability of the terminal device based on the type of the terminal device.

Optionally, if the base station is of a split architecture, to be specific, the base station is split into a CP and a UP, the CU is further split into a CU-CP and a CU-UP, and the CU-CP is further split into a CU-CP 1 and a CU-CP 2, the CU-CP 2 receives and decodes a message that is sent by the terminal device and that carries the scrambling capability indication information, and then the CU-CP 1 determines whether different levels of scrambling functions on a terminal device side are supported.

203: The base station determines scrambling policy indication information, where the scrambling policy indication information indicates a scrambling policy used by the terminal device.

In some embodiments, the scrambling policy indication information may indicate only one scrambling policy.

In some other embodiments, the scrambling policy indication information may indicate two or more scrambling policies.

In some embodiments, the scrambling policy includes a scrambling algorithm.

In some other embodiments, the scrambling policy further includes at least one of the following information: a scrambling level, a precision requirement of an AI model corresponding to the scrambled data, or a type of data that is protected from being leaked.

One scrambling policy may include one scrambling algorithm, or may include a plurality of scrambling algorithms. Similarly, one scrambling policy may include one scrambling level, or may include a plurality of scrambling levels. One scrambling policy may include a type of data that is protected from being leaked, or may include a plurality of types of data that is protected from being leaked.

In some embodiments, some information included in different scrambling policies may be the same, but other information is different. For example, different scrambling policies may include a same scrambling algorithm, but other information (for example, the scrambling level, the precision requirement of the AI model corresponding to the scrambled data, and/or the type of data that is protected from being leaked) is not completely the same. Scrambling levels included in different scrambling policies are the same, but scrambling algorithms are different or are not completely the same.

Optionally, in some embodiments, the base station may not need to receive the privacy level information from the terminal device, and may not obtain the scrambling capability of the terminal device. In this case, the base station may determine the scrambling policy indication information including one or more scrambling policies. If the terminal device determines, after receiving the scrambling policy indication information, that the terminal device can use the scrambling policy indicated in the scrambling policy indication information, the terminal device scrambles the target data according to the corresponding scrambling policy. If the terminal device determines, after receiving the scrambling policy indication information, that none of the scrambling policies indicated in the scrambling policy indication information can be used by the terminal device, the terminal device may send feedback information to the base station. After receiving the feedback information, the base station may re-determine a scrambling policy, and send the re-determined scrambling policy to the terminal device.

Optionally, in some other embodiments, the base station may obtain only the privacy level information, and does not obtain the scrambling capability of the terminal device. In this case, the base station may determine the scrambling policy indication information based on the privacy level information. For example, different privacy levels may correspond to different scrambling policies. The base station may determine a corresponding scrambling policy based on the privacy level information. In this embodiment, because the base station does not consider the scrambling capability of the terminal device when determining the scrambling policy, it is possible that the terminal device cannot use the scrambling policy determined by the base station. In this case, the terminal device may send feedback information to the base station. After receiving the feedback information, the base station may re-determine a scrambling policy, and send the re-determined scrambling policy to the terminal device.

Optionally, in some other embodiments, the base station may obtain only the scrambling capability of the terminal device, and does not obtain the privacy level information. In this case, the base station may determine the scrambling policy indication information based on the scrambling capability of the terminal device. For example, the base station may select a scrambling algorithm in the scrambling policy based on the scrambling algorithm supported by the terminal device, and select a scrambling level in the scrambling policy based on the scrambling level supported by the terminal device.

Optionally, in some other embodiments, the base station may obtain the scrambling capability of the terminal device and the privacy level information. In this case, the base station may determine the scrambling policy based on the scrambling capability of the terminal device and the privacy level. For example, one privacy level may correspond to a plurality of scrambling algorithms. The base station may select, from the plurality of scrambling algorithms based on the scrambling algorithm supported by the terminal device, one scrambling algorithm supported by the terminal device. For another example, one privacy level may correspond to a plurality of scrambling levels. The base station may select, from the plurality of scrambling levels based on the scrambling level supported by the terminal device, one scrambling level supported by the terminal device (for example, a highest scrambling level or a lowest scrambling level supported by the terminal device).

204: The base station sends the scrambling policy indication information to the terminal device. Correspondingly, the terminal device receives the scrambling policy indication information from the base station.

205: The terminal device scrambles the target data based on the scrambling policy indication information, to obtain the scrambled data.

In some embodiments, the scrambling policy indication information includes only one scrambling policy. In this case, the terminal device may directly scramble the target data according to the scrambling policy.

For example, if the scrambling policy includes only a scrambling algorithm, the terminal device may scramble the target data by adapting to the scrambling algorithm specified by the scrambling policy. Another parameter (for example the scrambling level and a type of data that needs to be scrambled) used for scrambling may be determined by the terminal device. A method for determining the parameter that may be determined by the terminal device is not limited in this embodiment of this application. The scrambling level is used as an example. In some embodiments, the terminal device may determine to use any scrambling level. In some other embodiments, the terminal device may alternatively determine to use a lowest scrambling level, a highest scrambling level, or an intermediate scrambling level. In some other embodiments, the terminal device may alternatively select a scrambling level based on some other information. For example, data of different types or data of different privacy levels corresponds to different scrambling levels. The terminal device may select the scrambling level based on a data type or the privacy level of the target data. For another example, the terminal device may select a corresponding scrambling level based on current computing resources of the terminal device. For example, if the current computing resources that can be used by the terminal device for scrambling are sufficient (for example, usage of the computing resources that can be used for scrambling is less than a preset threshold), the terminal device may use a higher scrambling level; or if the current computing resources that can be used by the terminal device for scrambling are insufficient (for example, resource usage is greater than a preset threshold), the terminal device may select a lower scrambling level.

For another example, if the scrambling policy includes the scrambling level, the terminal device scrambles the target data by using the scrambling level indicated in the scrambling policy.

For another example, if the scrambling policy includes the precision requirement of the AI model corresponding to the scrambled data, the terminal device may select some scrambling parameters, such as the scrambling level and the scrambling algorithm, based on the precision requirement. Another parameter $\varepsilon$ of the differential privacy parameter is used as an example. In some embodiments, for non-independent co-distributed data, when $\varepsilon=4$, model inference precision is 78.56%; when $\varepsilon=4.5$, model inference precision is 79.60%; and when $\varepsilon=5$, model inference precision is 81.28%. If the precision requirement of the AI model in the scrambling policy is higher than 80%, a differential privacy solution in which $\varepsilon=5$ can be selected.

For another example, if the scrambling policy includes the type of data that is protected from being leaked, the terminal device may scramble data whose type is the type of data that is protected from being leaked by using the scrambling algorithm and the scrambling level that are indicated in the scrambling policy.

In some other embodiments, the scrambling policy indication information may include a plurality of scrambling policies. In this case, the terminal device may select one of the plurality of scrambling policies as a target scrambling policy, and scramble the target data by using the target scrambling policy, to obtain the scrambled data.

In some embodiments, the terminal device may randomly select a scrambling policy as the target scrambling policy. For example, if the plurality of scrambling policies are all available to the terminal device, the terminal device may randomly select one scrambling policy as the target scrambling policy. For another example, if only some of the plurality of scrambling policies are available to the terminal device, the terminal device may randomly select an available scrambling policy as the target scrambling policy.

In some other embodiments, the terminal device may select the target scrambling policy based on related information. For example, the terminal device may select the scrambling policy based on any one or more pieces of information such as the data type, the privacy level, and a precision requirement of a corresponding AI model of the target data. For example, if the privacy level of the target data is high, the terminal device may select a complex scrambling policy as the target scrambling policy; or if the privacy level of the target data is low, the terminal device may select a simple scrambling policy as the target scrambling policy.

206: The terminal device sends the scrambled data to the base station. Correspondingly, the base station receives the scrambled data from the terminal device.

207: The base station processes the scrambled data.

Optionally, if the target data is the training data of the AI model, the base station may train the AI model based on the scrambled data. If the target data is the input data of the AI model, the base station may input the input data into the AI model, to obtain output data (that is, an inference and prediction result) of the AI model.

Optionally, if an AI module is located in the base station, the base station may directly process the scrambled data. If an AI module or a module responsible for model training and/or data inference (for example, the training module 102 and the model module 103 in FIG. 1) in the AI module is located in another network device (for example, a core network device), the base station may send the scrambled data to the corresponding network device.

In some embodiments, the base station may first determine whether the scrambled data can be normally processed, or whether the scrambled data can enable a corresponding AI model to maintain inference accuracy higher than a threshold. If the base station cannot normally process the scrambled data, or the scrambled data makes the inference accuracy of the AI model lower than the threshold, the base station may send re-scrambling indication information to the terminal device, where the re-scrambling indication information indicates the terminal device to reselect a scrambling policy to scramble the target data.

In some embodiments, the re-scrambling indication information may only indicate the terminal device to reselect a scrambling policy to scramble the target data. In other words, if the terminal device receives the re-scrambling indication information, the terminal device may reselect a scrambling policy. For example, a different scrambling level may be selected. For another example, another scrambling algorithm may be selected.

In some other embodiments, the base station may re-determine one or more scrambling policies, and indicate the re-determined one or more scrambling policies to the terminal device by using the re-scrambling indication information. The terminal device may select one of one or more scrambling policies indicated in the re-scrambling indication information to scramble the target data.

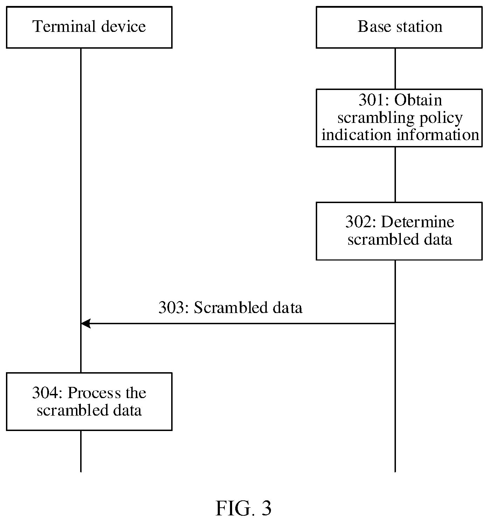

FIG. 3 is a schematic flowchart of another data transmission method according to an embodiment of this application.

301: A base station obtains scrambling policy indication information, where the scrambling policy indication information indicates a scrambling policy used by the base station.

The scrambling policy indication information may include a computing capability of a terminal device.

In some embodiments, the computing capability of the terminal device may be reflected by using a chip model of the terminal device or a clock frequency of a chip. In this case, the scrambling policy indication information may include a chip signal of the terminal device or the clock frequency of the chip. The chip herein is a chip that is in the terminal device and that is responsible for scrambling target data. The chip that scrambles the target data may be a central processing unit (central processing unit, CPU), a chip system (system-on-chip, SoC), a network processor (network processor, NP), a microcontroller unit (micro-controller unit, MCU), a field programmable gate array (field programmable gate array, FPGA), an application-specific integrated chip (application-specific integrated circuit, ASIC), a programmable controller (programmable logic device, PLD), another programmable logic device, discrete gate or transistor logic device, discrete hardware component, or another integrated chip.

In some embodiments, the computing capability of the terminal device may be reflected by using a model of the terminal device. There is a correspondence between the model of the terminal device and a chip used by the terminal device. For example, assuming that the terminal device is a mobile phone, after the model of the mobile phone is determined, the chip used by the terminal device may be determined based on the correspondence between the model and the chip. In this case, the scrambling policy indication information may include the model of the terminal device.

In some embodiments, the computing capability of the terminal device may be reflected by using a type of the terminal device. Different types of terminal devices have different computing capabilities. For example, a computing capability of a mobile phone is higher than a computing capability of a remote mobile POS machine, and the computing capability of the mobile POS machine is higher than a computing capability of a remote information collection device. In this case, the scrambling policy indication information may include the type of the terminal device.

In some embodiments, the computing capability of the terminal device may be reflected by using an available computing resource of the terminal device. The available computing resource is a computing resource that is in the terminal device and that can be used to process scrambled data. For example, when the terminal device has a small quantity of computing resources that can be used to process the scrambled data, the computing capability of the terminal device is low; or when the terminal device has a large quantity of computing resources that can be used to process the scrambled data, the computing capability of the terminal device is high. In this case, the scrambling policy indication information may further include an available budget resource of the terminal device.

In some embodiments, the computing capability of the terminal device may be reflected by using a current battery level of the terminal device. For example, when the current battery level of the terminal device is low, the computing capability of the terminal device is low; or when the current battery level of the terminal device is high, the computing capability of the terminal device is high. In this case, the scrambling policy indication information may further include the current battery level of the terminal device.

In some embodiments, the computing capability of the terminal device may be reflected by using a scrambling algorithm supported by the terminal device. Terminal devices with different computing capabilities support different scrambling algorithms and/or scrambling levels. In this case, the scrambling policy indication information may include the scrambling algorithm supported by the terminal device.

In some embodiments, the scrambling policy indication information may include one or more of the foregoing information to reflect the computing capability of the terminal device. For example, the scrambling policy indication information may include the scrambling algorithm supported by the terminal device and the current battery level of the terminal device. For another example, the scrambling policy indication information may include the device type of the terminal device and the available computing resource of the terminal device.

In some embodiments, the base station may determine the model and/or the device type of the terminal device by using an RRC message (for example, an RRC resume complete message, an RRC setup complete message, an RRC reestablishment complete message, or an RRC reconfiguration complete message) obtained in an RRC connection process, to determine the computing capability of the terminal device based on the model and/or the device type of the terminal device.

In some other embodiments, there is a correspondence between the scrambling algorithm supported by the terminal device and the model or the type of the terminal device. The base station may store the correspondence. In this case, the base station may determine the model and/or the device type of the terminal device by using the RRC message, and then determine, based on the correspondence, the scrambling algorithm supported by the terminal device.

In some other embodiments, the base station may send scrambling capability request information to the terminal device after the RRC connection is set up, where the scrambling capability request information is used to request to obtain a scrambling capability of the terminal device. After receiving the scrambling capability request information, the terminal device may feed back the computing capability of the terminal device to the base station.

In some embodiments, the scrambling capability request information may be carried in a UE capability enquiry message (UE capability enquiry message). Feedback information that is sent by the terminal device to the base station and that carries the computing capability may be carried in UE capability information (UE capability information message).

In some embodiments, when the base station is of a split architecture, to be specific, the base station is split into a CP and a UP, the CU is further split into a CU-CP and a CU-UP, and the CU-CP is further split into a CU-CP 1 and a CU-CP 2, the CU-CP 2 receives and decodes a message from the terminal device, and then the CU-CP 1 determines whether the terminal device supports direct processing of scrambled delivered data.

In some embodiments, the scrambling policy indication information may further include at least one of the following information: a precision requirement of an AI model corresponding to the scrambled data, a scrambling level, a storage capability of the terminal device, or data scrambling permission.

In the method shown in FIG. 3, the base station scrambles the target data to obtain the scrambled data.

In some embodiments, a training process of the AI model may be implemented by a network side device (for example, a base station or another network side device (for example, a core network device)), but a model obtained through training may be deployed in the terminal device. In this case, the base station may scramble a parameter of the AI model, and then send a scrambled parameter to the terminal device. Therefore, the target data may be the parameter of the AI model. The parameter of the AI model includes a parameter of the AI model, structure information of the AI model, and the like. A neural network is used as an example. A parameter of the neural network may include one or more of the following information: a quantity of layers of network layers in the neural network, a sequence of the network layers, a weight, a parameter, or a calculation formula of each network layer, or the like.

In some other embodiments, the AI model may be trained and deployed on a network side. In this case, the base station may scramble output data of the AI model, and then send scrambled output data to the terminal device. Therefore, the target data may alternatively be the output data of the AI model. For example, if the AI model is applied to a scenario such as network energy saving and mobility optimization, the output data may be a specific inference result, a policy instruction, or the like. For example, in a network energy saving scenario, the inference result may include an energy saving measure, duration, a load threshold for entering and exiting an energy saving state, and the like. For another example, in a beam management scenario, the inference result may be a scanning beam of k optimal scanning beams. For another example, in a positioning enhancement scenario, the inference result may be an intermediate result such as LOS/NLOS state information and time of arrival of a channel of an LOS path exported through inference.

The AI model is obtained through training by the base station or another network device. Therefore, the base station may determine the precision requirement of the AI model, or obtain the precision requirement of the AI model from a network device that trains the AI model.

In some embodiments, there may be a correspondence between the scrambling level and the computing capability of the terminal device. In this case, after determining the computing capability of the terminal device, the base station may determine the scrambling level based on the correspondence between the scrambling level and the computing capability. In some other embodiments, the terminal device may further feed back the scrambling level to the base station while feeding back the computing capability.

Similar to the scrambling level, in some embodiments, there may be a correspondence between the storage capability of the terminal device and the computing capability of the terminal device. In this case, after determining the computing capability of the terminal device, the base station may determine the storage capability of the terminal device based on the correspondence between the storage capability of the terminal device and the computing capability. In some other embodiments, the terminal device may further feed back the storage capability of the terminal device to the base station while feeding back the computing capability.

The data scrambling permission is control permission of the base station on whether data needs to be scrambled. In some cases, the terminal device may determine that all or some target data of the terminal device sent by the base station does not need to be scrambled. In this case, the base station may obtain the control permission on whether the terminal device determines data needs to be scrambled. After obtaining the control permission, the base station may scramble the target data. In some embodiments, the data scrambling permission may include a type of data that can be determined by the base station to scramble, or a privacy level that can be determined by the base station to scramble. In some other embodiments, the data scrambling permission may directly indicate that the base station can determine whether to scramble data. In some embodiments, the data scrambling permission may be requested by the base station from the terminal device. If the terminal device determines that the data scrambling permission can be granted to the base station, the terminal device may send the data scrambling permission to the base station. In some other embodiments, the data scrambling permission may be determined based on the model of the terminal device and/or the type of the terminal device. After determining the model of the terminal device and/or the type of the terminal device, the base station may determine the data scrambling permission based on a correspondence between the data scrambling permission and the type (or the model) of the terminal device.

302: The base station scrambles the target data based on the scrambling policy indication information, to obtain the scrambled data.

In some embodiments, the base station may determine, based on the computing capability of the terminal device, a scrambling policy that matches the computing capability. The scrambling policy may include a scrambling algorithm, a scrambling level, and the like.

In some embodiments, if the scrambling policy indication information includes the scrambling level, the scrambling level in the scrambling policy determined by the base station may be the same as the scrambling level in the scrambling policy indication information.

In some other embodiments, the base station may determine the scrambling level in the scrambling policy based on a type of target data that needs to be scrambled and the scrambling level in the scrambling policy indication information. For ease of description, the scrambling level in the scrambling policy indication information is referred to as a first scrambling level below, and the scrambling level in the scrambling policy is referred to as a second scrambling level below. The first scrambling level may be a highest scrambling level that can be used by the base station. In this case, the second scrambling level may be equal to or lower than the first scrambling level. For example, if the privacy level of the target data is low, the second scrambling level may be lower than the first scrambling level; or if the privacy level of the target data is high, the second scrambling level may be equal to the first scrambling level.

In some embodiments, if the scrambling policy indication information includes the precision requirement of the AI model, the base station may select an appropriate scrambling algorithm for the target data based on the precision requirement of the AI model and the computing capability of the terminal device.

In some embodiments, if the scrambling policy indication information includes the data scrambling permission, the base station may determine, based on the data scrambling permission, the target data that needs to be scrambled.

303: The base station sends the scrambled data to the terminal device. Correspondingly, the terminal device receives the scrambled data from the base station.

In some embodiments, the scrambled data may be carried in an RRC reconfiguration message (RRC reconfiguration message).

304: The terminal device processes the scrambled data.

Optionally, if the target data is the parameter of the AI model, the terminal device may set the AI model based on the scrambled data; or if the target data is the output data of the AI model, the terminal device may set a related parameter of the terminal device based on the output data.

Similarly, in some embodiments, the terminal device may first determine whether the scrambled data can be normally processed, or whether the scrambled data can enable a corresponding AI model to maintain inference accuracy higher than a threshold. If the terminal device cannot normally process the scrambled data, or the scrambled data makes the inference accuracy of the AI model lower than the threshold, the terminal device may send re-scrambling indication information to the base station, where the re-scrambling indication information indicates the base station to reselect a scrambling policy to scramble the target data.

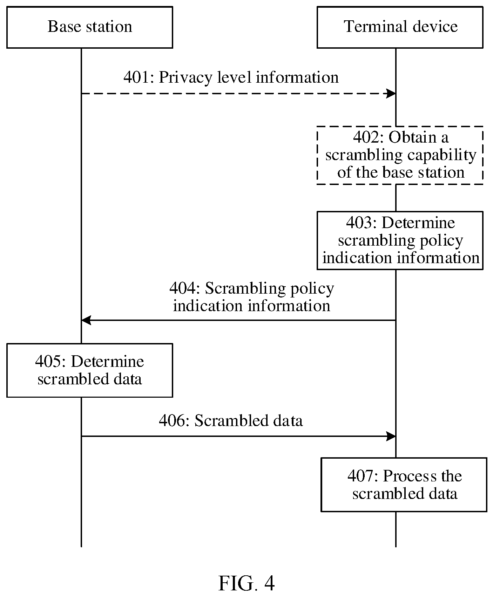

FIG. 4 is a schematic flowchart of another data transmission method according to an embodiment of this application.

401: A base station sends privacy level information to a terminal device.

In some embodiments, the privacy level information may indicate a privacy level of data (that is, target data) that needs to be scrambled by the base station and then sent to the terminal device.

In some embodiments, the target data may be a parameter of an AI model or output data of the AI model.

In some embodiments, different types of parameters, parameters of AI models in different scenarios, or different types of target data have different privacy requirements. For example, Table 3 shows privacy requirements of different data.

Table 3

| Privacy level | AI model |
|---|---|
| 1 | CSI feedback enhancement |
| 2 | Beam management |

(continued)

| Privacy level | AI model |
|---|---|
| 3 | Load balancing |
| 4 | Mobility optimization |

As shown in Table 3, a higher value of the privacy level indicates a higher privacy level. As shown in Table 3, if the target data is a parameter or output data of an AI model used for beam management, a privacy level of the target data is higher than a parameter or output data of an AI model used for CSI feedback enhancement; or if the target data is a parameter or output data of an AI model used for load balancing, a privacy level of the target data is higher than a parameter or output data of an AI model used for beam management; or if the target data is a parameter or output data of an AI model used for mobility optimization, a privacy level of the target data is higher than a parameter or output data of an AI model used for beam management. It may be understood that a relationship between the privacy level and data type and a total quantity of levels of privacy levels shown in Table 2 are merely examples, but are not intended to limit this embodiment of this application.

In some embodiments, the privacy level information may directly include the privacy level of the target data. For example, if the target data is a parameter or output data of an AI model that is of the base station and that is used for mobility optimization, the privacy level information may directly include a privacy level corresponding to mobility optimization, that is, a privacy level 4.

In some other embodiments, the privacy level information may include a type of an AI model of the target data. In this case, the terminal device may determine the privacy level of the target data based on a correspondence between the privacy level and the AI model. For example, the privacy level information indicates that a corresponding AI model of the target data is the AI model used for mobility optimization. In this case, the terminal device may determine, based on the correspondence between the privacy level and the AI model, that the privacy level of the target data is 4.

Certainly, in some other embodiments, the privacy level information may include both the privacy level of the target data and a type of an AI model of the target data.

In some other embodiments, the privacy level information may indicate a privacy level of the base station.

Different types of base stations may have different types of privacy levels. Table 4 shows a correspondence between the type of the base station and the privacy level.

Table 4

| Privacy level | Device type |
|---|---|
| 1 | Femto base station |
| 2 | Pico base station |
| 3 | Micro base station |
| 4 | Macro base station |

Similar to Table 3, in Table 4, a higher value of the privacy level indicates a higher privacy level. As shown in Table 4, a privacy level of the pico base station is higher than a privacy level of the femto base station, the privacy level of the pico base station is higher than a privacy level of the pico base station, and a privacy level of the macro base station is higher than the privacy level of the pico base station. It may be understood that the relationship between the privacy level and the device type and a total quantity of levels of privacy levels shown in Table 4 are merely examples, but are not intended to limit this embodiment of this application.

In some embodiments, the privacy level information may directly include the privacy level of the base station. For example, if the base station is the macro base station, the privacy level information may directly include the privacy level of the macro base station, that is, a privacy level 4.

In some other embodiments, the privacy level information may include the type of the base station. In this case, the terminal device may determine the privacy level of the target data based on the correspondence between the privacy level and the device type. For example, the privacy level information may indicate that the base station is the macro base station. In this case, the terminal device may determine, based on the correspondence between the privacy level and the device type, that a privacy level of the type of the base station is 4.

Certainly, in some other embodiments, the privacy level information may include both the privacy level of the base station and the type of the base station.

In some embodiments, the privacy level information may be a piece of dedicated information. For example, after the base station sets up an RRC connection to the terminal device, if the base station needs to send scrambled data to the terminal device, the base station may send the privacy level information to the terminal device before sending the scrambled data.

In some other embodiments, the privacy level information may be a non-dedicated message. For example, in a process of setting up the RRC connection to the terminal device, the base station may send an RRC message (for example, an RRC setup (RRC setup) message, an RRC connection reestablishment (RRC reestablishment) message, or an RRC reconfiguration (RRC configuration) message) to the terminal device. The RRC message carries type information of the base station. In this case, the terminal device may determine the privacy level of the base station based on the type of the base station carried in the RRC message. For another example, the base station may send the privacy level information together with other information to the terminal device. For example, the base station may send the privacy level information together with scrambling capability information of the base station to the terminal device.

402: The terminal device obtains a scrambling capability of the base station.

Similarly, the scrambling capability of the base station includes at least one of the following information: a scrambling algorithm supported by the base station, a scrambling level supported by the base station, a scrambled data resumption capability of the base station, or difference information between the target data and the scrambled data. The scrambling capability of the base station is similar to a scrambling capability of the terminal device. For specific descriptions of the scrambling capability of the base station, refer to the descriptions of the scrambling capability of the terminal device in FIG. 2. For brevity, details are not described herein again.

403: The terminal device determines scrambling policy indication information. The scrambling policy indication information indicates a scrambling policy used by the base station.

Content included in the scrambling policy indication information and a determining method are similar to the content included in the scrambling policy indication information and the determining method in the embodiment shown in FIG. 2. For brevity, details are not described herein again.

404: The terminal device sends the scrambling policy indication information to the base station. Correspondingly, the base station receives the scrambling policy indication information from the terminal device.

405: The base station scrambles the target data based on the scrambling policy indication information, to obtain the scrambled data.

The method for scrambling the target data by the base station is similar to the method for scrambling the target data by the terminal device in the embodiment in FIG. 2. For brevity, details are not described herein again.

406: The base station sends the scrambled data to the terminal device. Correspondingly, the terminal device receives the scrambled data from the base station.

407: The terminal device processes the scrambled data.

A specific method for processing the scrambled data by the terminal device is the same as the method for processing the scrambled data by the terminal device in the embodiment shown in FIG. 3. For brevity, details are not described herein again.

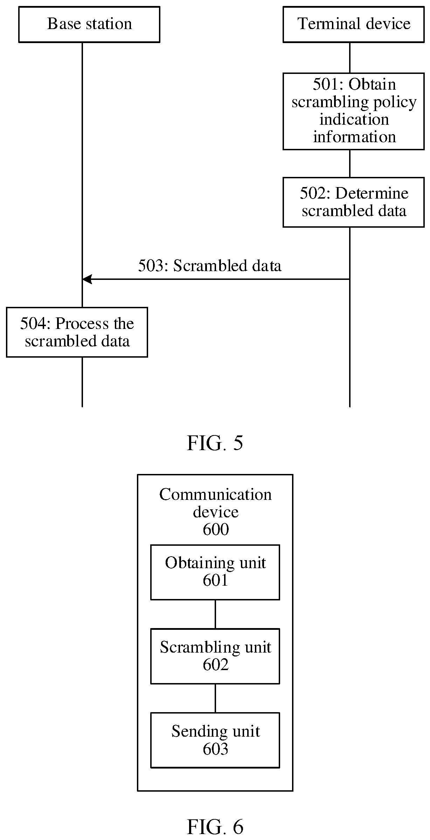

FIG. 5 is a schematic flowchart of another data transmission method according to this application.

501: A terminal device obtains scrambling policy indication information, where the scrambling policy indication information indicates a scrambling policy used by the terminal device.

The scrambling policy indication information may include a computing capability of a base station.

In some embodiments, the computing capability of the base station may be reflected by using a type of the base station. In some embodiments, the computing capability of the base station may be reflected by using a type of the base station. Different types of base stations have different computing capabilities. For example, a computing capability of a macro base station is higher than a computing capability of a micro base station, and the computing capability of the micro base station is higher than a computing capability of a pico base station or a collection device of a femto base station. In this case, the scrambling policy indication information may include the type of the base station.

In some embodiments, the computing capability of the base station may be reflected by using an available computing resource of the base station. The available computing resource is a computing resource that is in the base station and that can be used to process scrambled data. For example, when the base station has a small quantity of computing resources that can be used to process the scrambled data, the computing capability of the base station is low; or when the base station has a large quantity of computing resources that can be used to process the scrambled data, the computing capability of the base station is high. In this case, the scrambling policy indication information may further include an available budget resource of the base station.

In some embodiments, the computing capability of the base station may be reflected by using a scrambling algorithm supported by the base station. Base stations with different computing capabilities support different scrambling algorithms and/or scrambling levels. In this case, the scrambling policy indication information may include the scrambling algorithm supported by the base station.

In some embodiments, the scrambling policy indication information may include one or more of the foregoing information to reflect the computing capability of the base station. For example, the scrambling policy indication information may include the scrambling algorithm supported by the base station and a current battery level of the base station. For another example, the scrambling policy indication information may include a device type of the base station and the available computing resource of the base station.

In some embodiments, the terminal device may determine the type of the base station by using an RRC message (for example, an RRC setup message, an RRC reestablishment message, or an RRC reconfiguration message) obtained in an RRC connection process, to determine the computing capability of the base station based on the type of the base station.

In some other embodiments, there is a correspondence between the scrambling algorithm supported by the base station and the type of the base station. The terminal device may store the correspondence. In this case, the terminal device may determine the type of the base station by using the RRC message, and then determine, based on the correspondence, the scrambling algorithm supported by the base station.

In some other embodiments, the terminal device may send scrambling capability request information to the base station after the RRC connection is set up, where the scrambling capability request information is used to request to obtain a scrambling capability of the base station. After receiving the scrambling capability request information, the base station may feed back the computing capability of the base station to the terminal device.

In some embodiments, the scrambling policy indication information may further include at least one of the following information: a precision requirement of an AI model corresponding to the scrambled data, a scrambling level, a storage capability of the base station, or data scrambling permission. For specific content of the information, refer to the embodiment shown in FIG. 3. For brevity, details are not described herein again.

502: The terminal device scrambles target data based on the scrambling policy indication information, to obtain the scrambled data.

A specific implementation method for scrambling the target data by the terminal device is similar to the specific implementation method for scrambling the target data by the base station in the embodiment shown in FIG. 3. For brevity, details are not described herein again.

503: The terminal device sends the scrambled data to the base station. Correspondingly, the base station receives the scrambled data from the terminal device.

504: The base station processes the scrambled data.

A specific implementation method for processing the scrambled data by the base station is similar to the specific implementation method for processing the scrambled data by the base station in the embodiment shown in FIG. 2. For brevity, details are not described herein again.

It may be understood that, an example in which the network device in the foregoing embodiment is the base station is used for description. The steps performed by the base station in the foregoing embodiments may also be implemented by another network device (for example, a device such as a management entity or a core network device). For example, the management entity may obtain the scrambling capability of the terminal device and determine the scrambling policy indication information. The management entity sends the determined scrambling policy indication information to the terminal device via the base station. The terminal device determines the scrambled data based on the scrambling policy indication information, and then sends the scrambled data to the management entity via the base station.

FIG. 6 is a block diagram of a structure of a communication device according to an embodiment of this application. The communication device 600 shown in FIG. 6 includes an obtaining unit 601, a scrambling unit 602, and a sending unit 603.

The obtaining unit 601 is configured to obtain scrambling indication information, where the scrambling indication information indicates a scrambling policy used by the communication device 600.

The scrambling unit 601 is configured to scramble target data based on the scrambling policy indication information, to obtain scrambled data, where the target data is data used for an AI model.

The sending unit 603 is configured to send the scrambled data to another communication device.

In some embodiments, the communication device 600 may be a terminal device or a component (for example, a chip or a chip system) in the terminal device.

In some other embodiments, the communication device 600 may be a network device or a component (for example, a chip or a chip system) in a network device.

The obtaining unit 601 and the scrambling unit 602 may be implemented by a processor or a logic circuit, and the sending unit 603 may be implemented by a transmitter or an input/output interface.

For specific functions and beneficial effects of the obtaining unit 601, the scrambling unit 602, and the sending unit 603, refer to the foregoing embodiments. For brevity, details are not described herein again.

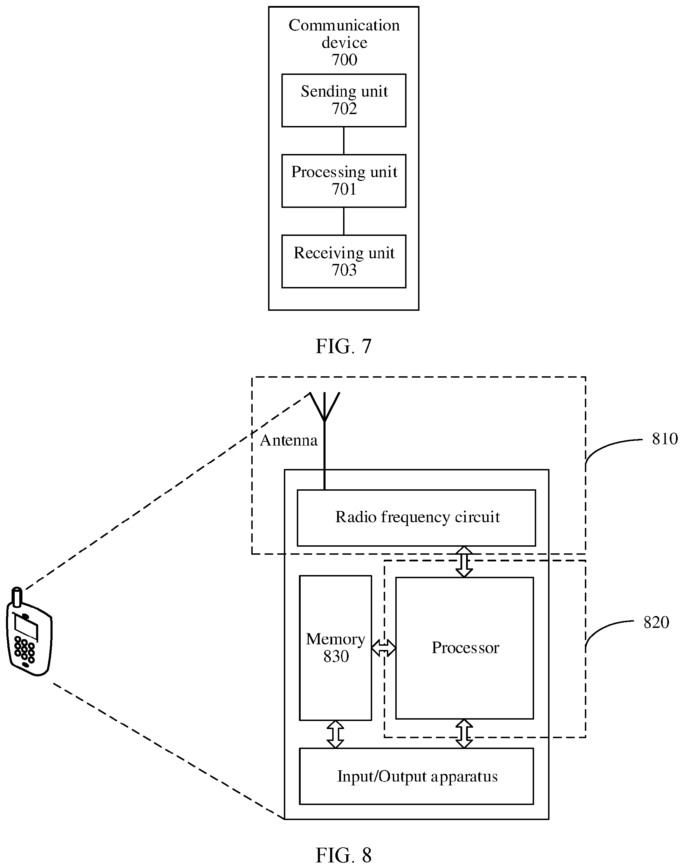

FIG. 7 is a block diagram of a structure of another communication device according to an embodiment of this application. The communication device 700 shown in FIG. 7 includes a processing unit 701, a sending unit 702, and a receiving unit 703.

The processing unit 701 is configured to determine scrambling policy indication information, where the scrambling policy indication information indicates a scrambling policy used by another communication device.

The sending unit 702 is configured to send the scrambling policy indication information to the another communication device.

The receiving unit 703 is configured to receive scrambled data from the another communication device.

The processing unit 701 is further configured to determine data of an AI model based on the scrambled data.

In some embodiments, the communication device 700 may be a terminal device or a component (for example, a chip or a chip system) in the terminal device.

In some other embodiments, the communication device 700 may be a network device or a component (for example, a chip or a chip system) in a network device.

The processing unit 701 may be implemented by a processor or a logic circuit, and the sending unit 702 and the receiving unit 703 may be implemented by a transmitter or an input/output interface.

For specific functions and beneficial effects of the processing unit 701, the sending unit 702, and the receiving unit 703, refer to the foregoing embodiments. For brevity, details are not described herein again.

FIG. 8 is a simplified diagram of a structure of a terminal device. For ease of understanding and drawing, in FIG. 8, a mobile phone is used as an example of the terminal device. As shown in FIG. 8, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send radio frequency signals in a form of an electromagnetic wave. The input/output apparatus, like a touchscreen, a display, or a keyboard, is mainly configured to: receive data input by a user and output data to the user. It should be noted that some types of terminal devices may have no input/output apparatus.

When data needs to be sent, the processor performs baseband processing on the to-be-sent data, and the processor outputs a baseband signal to the radio frequency circuit. After performing radio frequency processing on the baseband signal, the radio frequency circuit sends, through the antenna, a radio frequency signal to the outside in a form of an electromagnetic wave. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 8 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 8, the terminal device includes a radio frequency circuit 810, a processor 820, and a memory 830. The radio frequency circuit 810 may also be referred to as a transceiver unit, a transceiver module, a transceiver, a transceiver machine, a transceiver apparatus, or the like. The processor 820 may also be referred to as a processing unit, a processing board, a processing module, a processing apparatus, or the like. Optionally, a component that is in the radio frequency circuit 810 and that is configured to implement a receiving function may be considered as a receiving unit, and a component that is in the radio frequency circuit 810 and that is configured to implement a sending function may be considered as a sending unit. In other words, the radio frequency circuit 810 includes the receiving unit and the sending unit. The radio frequency circuit 810 sometimes may also be referred to as a transceiver unit, a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmitting circuit, or the like. The memory 830 is configured to store instructions and/or program code. The processor 820 reads and executes the instructions and/or the code stored in the memory 830, and implements the steps in the foregoing method embodiments in combination with the radio frequency circuit 810.

For example, in an implementation, the processor 820 is configured to perform Step 205 in FIG. 2, and the processor 820 is further configured to perform another processing step on a terminal device side in this embodiment of this application. The radio frequency circuit 810 is further configured to perform Step 204 shown in FIG. 2, and the radio frequency circuit 810 is further configured to perform another receiving and sending step on the terminal device side.

For another example, in an implementation, the processor 820 is configured to perform Step 304 in FIG. 3. The radio frequency circuit 810 is further configured to perform Step 303 shown in FIG. 3.

For another example, in an implementation, the processor 820 is configured to perform Step 403 in FIG. 4, and the processor 820 is further configured to perform another processing step on a terminal device side in this embodiment of this application. The radio frequency circuit 810 is further configured to perform Step 404 shown in FIG. 4, and the radio frequency circuit 810 is further configured to perform another receiving and sending step on the terminal device side.

For another example, in an implementation, the processor 820 is configured to perform Step 501 in FIG. 5, and the processor 820 is further configured to perform another processing step on a terminal device side in this embodiment of this application. The radio frequency circuit 810 is further configured to perform Step 503 shown in FIG. 5.

It should be understood that FIG. 8 is merely an example rather than a limitation, and the terminal device including the radio frequency circuit 810, the processor 820, and the memory 830 may not rely on the structure shown in FIG. 8.

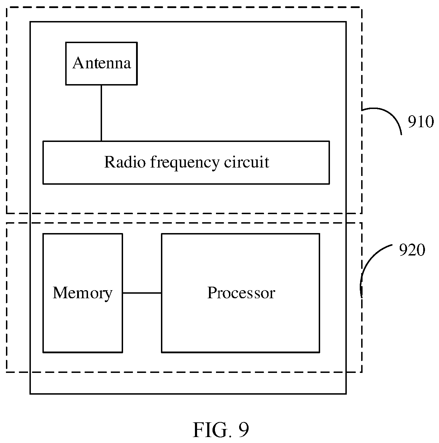

FIG. 9 is a simplified diagram of a structure of a network device. The network device includes a part 910 and a part 920. The part 910 is mainly configured to: receive and send radio frequency signals and perform conversion between a radio frequency signal and a baseband signal. The part 920 is mainly configured to: perform baseband processing, control the network device, and the like. The part 920 is usually a control center of the network device, and is configured to control the network device to perform a processing operation on a network device side in the foregoing method embodiments.

A transceiver unit of the part 910 may also be referred to as a transceiver machine, a transceiver, or the like, and includes an antenna and a radio frequency unit. The radio frequency unit is mainly configured to perform radio frequency processing. Optionally, a component that is in the part 910 and that is configured to implement a receiving function may be considered as a receiving unit, and a component configured to implement a sending function may be considered as a sending unit. In other words, the part 910 includes the receiving unit and the sending unit. The receiving unit may also be referred to as a receiver machine, a receiver, a receiver circuit, or the like. The sending unit may be referred to as a transmitter machine, a transmitter, a transmitting circuit, or the like.

The part 920 may include one or more boards, and each board may include one or more processors and one or more memories. The processor is configured to read and execute a program in the memory to implement a baseband processing function and control the network device. If there are a plurality of boards, the boards may be interconnected with each other, to enhance a processing capability. In an optional implementation, the plurality of boards may share one or more processors, or the plurality of boards share one or more memories, or the plurality of boards share one or more processors at a same time.

For example, in an implementation, the component in the part 910 is configured to perform Step 204 shown in FIG. 2, and the transceiver unit in the part 910 is further configured to perform other receiving and sending steps on a network device side in this embodiment of this application. The processor in the part 920 is configured to perform a processing operation of Step 203 in FIG. 2, and the processor in the part 920 is further configured to perform a processing step on a network device side in this embodiment of this application.

For another example, in an implementation, the component in the part 910 is configured to perform Step 303 shown in FIG. 3. The processor in the part 920 is configured to perform a processing operation of Step 302 in FIG. 3, and the processor in the part 920 is further configured to perform a processing step on a network device side in this embodiment of this application.

For another example, in an implementation, the component in the part 910 is configured to perform Step 504 shown in FIG. 4, and the transceiver unit in the part 910 is further configured to perform other receiving and sending steps on a network device side in this embodiment of this application. The processor in the part 920 is configured to perform a processing operation of Step 405 in FIG. 4.

For another example, in an implementation, the component in the part 910 is configured to perform Step 503 shown in FIG. 5. The processor in the part 920 is configured to perform a processing operation of Step 504 in FIG. 5.

It should be understood that FIG. 9 is merely an example rather than a limitation, and the network device including the transceiver unit and the processing unit may not rely on the structure shown in FIG. 9.

In addition, the network device is not limited to the foregoing form, or may be in another form, for example, in a CU-DU separation architecture, or may be in another form. This is not limited in this application.

It should be understood that the processor may be a chip. For example, the processor may be a field programmable gate array (field programmable gate array, FPGA), an application-specific integrated chip (application-specific integrated circuit, ASIC), a system-on-chip (system-on-chip, SoC), a central processing unit (central processing unit, CPU), a network processor (network processor, NP), a digital signal processing circuit (digital signal processor, DSP), a microcontroller unit (microcontroller unit, MCU), a programmable controller (programmable logic device, PLD), another programmable logic device, a discrete gate or a transistor logic device, a discrete hardware component, or another integrated chip.

In an implementation process, the steps in the foregoing methods can be implemented by using an integrated logic circuit of hardware in the processor, or instructions in a form of software. The steps in the methods disclosed with reference to embodiments of this application may be directly performed and completed by a hardware processor, or may be performed and completed by using a combination of hardware and a software module in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments can be implemented by using an integrated logic circuit of hardware in the processor, or instructions in a form of software. A general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of illustrative rather than limitative descriptions, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification includes but is not limited to these memories and any memory of another appropriate type.

According to the methods provided in embodiments of this application, this application further provides a computer program product. The computer program product includes computer program code, and when the computer program code is run on a computer, the computer is enabled to perform the steps performed by the terminal device in the foregoing embodiments.

According to the methods provided in embodiments of this application, this application further provides a computer-readable medium. The computer-readable medium stores program code, and when the program code is run on a computer, the computer is enabled to perform the steps performed by the terminal device in the foregoing embodiments.

According to the methods provided in embodiments of this application, an embodiment of this application provides a chip system. The chip system includes a logic circuit, and the logic circuit is coupled to an input/output interface, and is configured to transmit data through the input/output interface, to perform the steps performed by the terminal device in the foregoing embodiments.

According to the methods provided in embodiments of this application, this application further provides a computer program product. The computer program product includes computer program code, and when the computer program code is run on a computer, the computer is enabled to perform the steps performed by the network device in the foregoing embodiments.

According to the methods provided in embodiments of this application, this application further provides a computer-readable medium. The computer-readable medium stores program code, and when the program code is run on a computer, the computer is enabled to perform the steps performed by the network device in the foregoing embodiments.

According to the methods provided in embodiments of this application, an embodiment of this application provides a chip system. The chip system includes a logic circuit, and the logic circuit is coupled to an input/output interface, and is configured to transmit data through the input/output interface, to perform the steps performed by the network device in the foregoing embodiments.

According to the methods provided in embodiments of this application, an embodiment of this application further provides a system, and the system includes a network device and one or more terminal devices.

A person of ordinary skill in the art may be aware that, in combination with units and algorithm steps in the examples described in embodiments disclosed in this specification, this application may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus and method may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or another form.

The units described as separate components may or may not be physically separate, and components displayed as units may or may not be physical units, in other words, may be located in one location, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A data transmission method, wherein the method comprises:

    obtaining, by a first communication device, scrambling policy indication information, wherein the scrambling policy indication information indicates a scrambling policy used by the first communication device;
    scrambling, by the first communication device, target data based on the scrambling policy indication information, to obtain scrambled data, wherein the target data is data used for an artificial intelligence AI model; and
    sending, by the first communication device, the scrambled data to a second communication device.

2.  The method according to claim 1, wherein the scrambling policy indication information specifically indicates a computing capability of the second communication device.

3.  The method according to claim 2, wherein the scrambling policy indication information further indicates at least one of the following information: a precision requirement of an AI model corresponding to the scrambled data, a scrambling level, a storage capability of the second communication device, or data scrambling permission.

4.  The method according to claim 1, wherein the scrambling policy indication information specifically indicates at least one scrambling policy, and the scrambling policy comprises a scrambling algorithm.

5.  The method according to claim 4, wherein the scrambling policy further comprises at least one of the following information: a scrambling level, a precision requirement of an AI model corresponding to the scrambled data, or a type of data that is protected from being leaked.

6.  The method according to claim 4 or 5, wherein when the scrambling policy indication information indicates a plurality of scrambling policies, the scrambling, by the first communication device, target data based on the scrambling policy indication information comprises:

    determining, by the first communication device, a target scrambling policy from the plurality of scrambling policies; and

scrambling, by the first communication device, the target data according to the target scrambling policy.

7. The method according to any one of claims 4 to 6, wherein before the obtaining, by a first communication device, scrambling policy indication information, the method further comprises:
sending, by the first communication device, scrambling capability indication information to the second communication device, wherein the scrambling capability indication information indicates at least one of the following information: a scrambling algorithm supported by the first communication device, a scrambling level supported by the first communication device, a scrambled data resumption capability of the first communication device, or difference information between the target data and the scrambled data.

8. The method according to any one of claims 4 to 7, wherein before the obtaining, by a first communication device, scrambling policy indication information, the method further comprises:
sending, by the first communication device, privacy level information to the second communication device, wherein the privacy level information indicates a privacy level of the target data and/or a privacy level of the first communication device.

9. The method according to any one of claims 2 to 8, wherein the first communication device is a network device, and the second communication device is a terminal device.

10. The method according to claim 9, wherein the target data comprises at least one of the following data: a parameter of the AI model or output data of the AI model.

11. The method according to any one of claims 2 to 8, wherein the first communication device is a terminal device, and the second communication device is a network device.

12. The method according to claim 11, wherein the target data is input data of the AI model, or the target data is training data used to train the AI model.

13. A data transmission method, wherein the method comprises:

determining, by a second communication device, scrambling policy indication information, wherein the scrambling policy indication information indicates a scrambling policy used by a first communication device;
sending, by the second communication device, the scrambling policy indication information to the first communication device;
receiving, by the second communication device, scrambled data from the first communication device; and
determining, by the second communication device, data of an artificial intelligence AI model based on the scrambled data, wherein the first communication device and the second communication device are communication devices in a mobile communication system.

14. The method according to claim 13, wherein the scrambling policy indication information specifically indicates a computing capability of the second communication device.

15. The method according to claim 14, wherein the scrambling policy indication information further indicates at least one of the following information: a precision requirement of the AI model, a scrambling level, a storage capability of the second communication device, or data scrambling permission.

16. The method according to claim 13, wherein the scrambling policy indication information specifically indicates at least one scrambling policy, and the scrambling policy comprises a scrambling algorithm.

17. The method according to claim 16, wherein the scrambling policy further comprises at least one of the following information: a scrambling level, a precision requirement of the AI model, or a type of data that is protected from being leaked.

18. The method according to claim 16 or 17, wherein before the determining, by a second communication device, scrambling policy indication information, the method further comprises:

receiving, by the second communication device, scrambling capability indication information from the first communication device, wherein the scrambling capability indication information indicates at least one of the following information: a scrambling algorithm supported by the first communication device, a scrambling level supported by the first communication device, a scrambled data resumption capability of the first communication device, or difference information between data that needs to be scrambled and the scrambled data; and
the determining, by a second communication device, scrambling policy indication information comprises:
determining, by the second communication device, the scrambling policy indication information based on the scrambling capability indication information.

19. The method according to claim 18, wherein before the determining, by a second communication device, scrambling policy indication information, the method further comprises:

receiving, by the second communication device, privacy level information from the first communication device, wherein the privacy level information indicates a privacy level of the scrambled data and/or a privacy level of the first communication device; and
the determining, by the second communication device, the scrambling policy indication information based on the scrambling capability indication information comprises:
determining, by the second communication device, the scrambling policy indication information based on the scrambling capability indication information and the privacy level information.

20. The method according to any one of claims 14 to 19, wherein the first communication device is a network device, and the second communication device is a terminal device.

21. The method according to claim 20, wherein the determining, by the second communication device, data of an artificial intelligence AI model based on the scrambled data comprises:
determining, by the second communication device, a parameter of the AI model or output data of the AI model based on the scrambled data.

22. The method according to any one of claims 14 to 19, wherein the first communication device is a terminal device, and the second communication device is a network device.

23. The method according to claim 22, wherein the determining, by the second communication device, data of an artificial intelligence AI model based on the scrambled data comprises:
determining, by the second communication device based on the scrambled data, input data of the AI model or training data used to train the AI model.

24. A communication device, comprising a module configured to perform the method according to any one of claims 1 to 12.

25. A communication device, comprising a module configured to perform the method according to any one of claims 13 to 23.

26. A communication device, comprising a processor, wherein the processor is configured to: be coupled to a memory, and read and execute instructions and/or program code in the memory, to perform the method according to any one of claims 1 to 12.

27. A communication device, comprising a processor, wherein the processor is configured to: be coupled to a memory, and read and execute instructions and/or program code in the memory, to perform the method according to any one of claims 13 to 23.

28. A chip system, comprising a logic circuit, wherein the logic circuit is configured to: be coupled to an input/output interface, and transmit data through the input/output interface, to perform the method according to any one of claims 1 to 12.

29. A chip system, comprising a logic circuit, wherein the logic circuit is configured to: be coupled to an input/output interface, and transmit data through the input/output interface, to perform the method according to any one of claims 13 to 23.

30. A computer-readable medium, wherein the computer-readable medium stores program code, and when the computer program code is run on a computer, the computer is enabled to perform the method according to any one of claims 1 to 12.

31. A computer-readable medium, wherein the computer-readable medium stores program code, and when the computer program code is run on a computer, the computer is enabled to perform the method according to any one of claims 13 to 23.

100

FIG. 1

FIG. 2

```
┌──────────────────┐                      ┌──────────────────┐
│  Terminal device │                      │   Base station   │
└──────────────────┘                      └──────────────────┘
         │                                         │
         │                              ┌──────────────────────┐
         │                              │    301: Obtain        │
         │                              │  scrambling policy    │
         │                              │ indication information │
         │                              └──────────────────────┘
         │                                         │
         │                              ┌──────────────────────┐
         │                              │   302: Determine      │
         │                              │   scrambled data      │
         │                              └──────────────────────┘
         │                                         │
         │        303: Scrambled data              │
         │ ◄───────────────────────────────────────│
         │                                         │
┌──────────────────┐                               │
│ 304: Process the │                               │
│  scrambled data  │                               │
└──────────────────┘                               │
         │                                         │
```

FIG. 3

Base station

Terminal device

401: Privacy level information

402: Obtain a
scrambling capability
of the base station

403: Determine
scrambling policy
indication information

404: Scrambling policy
indication information

405: Determine
scrambled data

406: Scrambled data

407: Process the
scrambled data

FIG. 4

| Base station | | Terminal device |

501: Obtain
scrambling policy
indication
information

502: Determine
scrambled data

503: Scrambled data

504: Process the
scrambled data

FIG. 5

Communication
device
600

Obtaining unit
601

Scrambling unit
602

Sending unit
603

FIG. 6

Communication
device
700

Sending unit
702

Processing unit
701

Receiving unit
703

FIG. 7

Antenna

Radio frequency circuit

810

Memory
830

Processor

820

Input/Output apparatus

FIG. 8

| Antenna |
| --- |

| Radio frequency circuit |
| --- |

910

| Memory | Processor |
| --- | --- |

920

FIG. 9

## INTERNATIONAL SEARCH REPORT

| International application No. |
| --- |
| **PCT/CN2023/120430** |

| A. | CLASSIFICATION OF SUBJECT MATTER |
| --- | --- |
| | H04L25/03(2006.01)i |

According to International Patent Classification (IPC) or to both national classification and IPC

| B. | FIELDS SEARCHED |
| --- | --- |

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

3GPP, CNKI, CNABS, CNTXT, VEN, WOTXT, EPTXT, USTXT: 基站, 终端, 机器学习, 人工智能, 模型, 加密, 加扰, eNB, UE, AI, ML, model, scrambling, encryption

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2021232832 A1 (HUAWEI TECHNOLOGIES CO., LTD.) 25 November 2021 (2021-11-25) description, page 10, paragraph 2 to page 41, second-to-last paragraph | 1-31 |
| X | US 2022060328 A1 (LI, X. et al.) 24 February 2022 (2022-02-24) description, paragraphs [0047]-[0188] | 1-31 |
| A | WO 2022142366 A1 (HUAWEI TECHNOLOGIES CO., LTD.) 07 July 2022 (2022-07-07) entire document | 1-31 |
| A | WO 2022158686 A1 (SAMSUNG ELECTRONICS CO., LTD.) 28 July 2022 (2022-07-28) entire document | 1-31 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **30 November 2023** | **07 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/120430**

| Patent document cited in search report | | | Publication date (day/month/year) | Patent family member(s) | | | Publication date (day/month/year) |
|---|---|---|---|---|---|---|---|
| WO | 2021232832 | A1 | 25 November 2021 | US | 2023082173 | A1 | 16 March 2023 |
| US | 2022060328 | A1 | 24 February 2022 | US | 11283609 | B2 | 22 March 2022 |
| | | | | WO | 2022037235 | A1 | 24 February 2022 |
| WO | 2022142366 | A1 | 07 July 2022 | EP | 4270266 | A1 | 01 November 2023 |
| | | | | US | 2023342669 | A1 | 26 October 2023 |
| WO | 2022158686 | A1 | 28 July 2022 | KR | 20220105509 | A | 27 July 2022 |

Form PCT/ISA/210 (patent family annex) (July 2022)

**EP 4 583 464 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211184806